# EUROPÄISCHE PATENTSCHRIFT

(11) **EP 3 141 123 B1**
(45) Veröffentlichungstag und Bekanntmachung des Hinweises auf die Patenterteilung: **04.11.2020**
(21) Anmeldenummer: 15184660.7
(22) Anmeldetag: 10.09.2015
(51) Int. Cl.: A21C 3/08

(54) **VERFAHREN ZUR VERARBEITUNG EINES TEIGSTRANGS UND TEIGVERARBEITUNGSVORRICHTUNG HIERFÜR**
METHOD FOR PROCESSING A STRAND OF DOUGH AND DOUGH PROCESSING DEVICE FOR SAME
PROCEDE DE TRAITEMENT D'UN PATON ET DISPOSITIF DE PREPARATION DE PATE CORRESPONDANT

(43) Veröffentlichungstag der Anmeldung: 15.03.2017
(73) Patentinhaber: Fritsch Bakery Technologies GmbH & Co. KG, 97348 Markt Einersheim (DE)
(72) Erfinder: BERNHARDT, Udo, 97346 Iphofen (DE)
(74) Vertreter: Grünecker Patent- und Rechtsanwälte PartG mbB

(56) Entgegenhaltungen:
- EP-B1- 2 618 670
- WO-A1-01/60164
- WO-A1-98/20741

## Beschreibung

Die Erfindung betrifft ein Verfahren zur Verarbeitung eines U-förmig gebogenen Teigstrangs, wobei der Teigstrang mittels eines Verarbeitungskopfes mit mindestens zwei Greifermitteln zu einer Teigstrangschlaufe geschlungen wird und mittels eines Verarbeitungstisches mit Positionierungsmitteln positioniert wird, wobei mindestens ein als Anhebemittel ausgebildetes Positionierungsmittel den Teigstrang bereichsweise in eine gegenüber dem Verarbeitungstisch angehobene Anhebeposition anhebt und/oder wobei mindestens ein als Tischgreifer ausgebildetes Positionierungsmittel eines der Teigstrangenden bereichsweise dehnt und/oder zieht. Ferner betrifft die Erfindung eine Teigverarbeitungsvorrichtung zum Verarbeiten eines U-förmigen Teigstrangs, mit einem Verarbeitungskopf und einem Verarbeitungstisch, insbesondere für ein erfindungsgemäßes Verfahren. Die Erfindung betrifft außerdem ein Positionierungsmittel für einen Verarbeitungstisch einer Teigverarbeitungsvorrichtung.

Vorrichtungen und Verfahren zum Schlingen von Teigsträngen sind beispielsweise aus der maschinellen Brezelherstellung bekannt. So beschreibt die WO 01/601164 ein Teigverarbeitungssystem, das aus zwei Hauptkomponenten, einem Verarbeitungskopf, der mit zwei programmiergesteuerten Greifern versehen ist und einem Formtisch. In den Formtisch ist ein Haltekörper integriert, der mehrere als Haltestifte ausgeführte Positionierungsmittel umfasst. Die Haltestifte positionieren den Teigstrang am Formtisch, während die Greifer den Teigstrang mittels einer Schlingbewegung in die gewünschte Brezelform bringen.

Eine alternative Ausführungsform eines Teigverarbeitungssystems sowie ein alternatives Verfahren sind aus der EP 2 618 670 B1 bekannt. Zum Schlingen eines Einstrangzopfes aus einem U-förmigen Teigstrang weist das Teigverarbeitungssystem einen Schlingkopf mit zwei Greifermitteln sowie einen Formtisch auf. Der Formtisch ist als Verarbeitungstisch ausgebildet, wobei verschiedene Verarbeitungselemente in den Tisch integriert sind und in Kombination mit den Greifermitteln des Schlingkopfes die für einen Zopf charakteristischen Schlaufen und Formen bilden.

Nachteilig an den beschriebenen Teigverarbeitungssystemen ist, dass der Schlingkopf, der Formtisch bzw. Verarbeitungstisch und die Positionierungsmittel hinsichtlich ihrer Abmessung und Positionierung speziell zur Herstellung einer einzigen Teigform, also einer Brezel bzw. eines Einstrangzopfes ausgebildet sind. So erfordert die Verwendung eines Teigverarbeitungssystems zum Schlingen eines Einstrangzopfes beispielsweise eine hohe Ausgangslänge des Teigstrangs, was zwangsweise zu einem Endprodukt führt, welches Größe und Gewicht eines herkömmlichen Brötchens und/oder einer Semmel überschreitet. Auch weisen die entstehenden Teigprodukte eine zumeist lockere, mit Öffnungen durchsetzte und wenig kompakte Form auf.

Der Erfindung liegt die Aufgabe zugrunde, die genannten Nachteile zu vermeiden und neue Anwendungsbereiche, insbesondere die Herstellung eines kompakten Teigknotens, in der maschinellen Teigverarbeitung zu erschließen.

Ein erfindungsgemäßes Verfahren ist zur Verarbeitung eines U-förmig gebogenen Teigstrangs mit einem ersten Teigstrangende, das als Teigstrang-Fixende verwendbar ist und einem zweiten Teigstrangende, das als Teigstrang-Schlingende verwendbar ist geeignet und kennzeichnet sich durch mindestens ein als Verknotungsmittel ausgebildetes Positionierungsmittel, das eine Öffnung einer Teigstrangschlaufe spreizt und/oder dehnt und eines der Teigstrangenden durch die Teigstrangschlaufe führt. Das heißt, entweder erfüllt mindestens ein Verknotungsmittel eine oder beide der Funktionen, Spreizen/Dehnen der Teigstrangschlaufe und/oder Führen des Teigstrangendes, oder mindestens ein Verknotungsmittel erfüllt eine der Funktionen und mindestens ein weiteres Verknotungsmittel die jeweils andere Funktion. Das durch die Teigstrangschlaufe geführte Teigstrangende wird, insbesondere unter Ausnutzung der Teigstrang-Elastizität, mittels der Teigstrangschlaufe fixiert, wobei das Teigstrangende die Teigstrangschlaufe durchsetzt.

In einer optionalen Ausführung umfasst das erfindungsgemäße Verfahren mindestens die nachfolgenden Schritte, insbesondere in der angegebenen Reihenfolge:
- Der U-förmige Teigstrang wird derart auf dem Verarbeitungstisch ausgerichtet, dass das erste Ende des Teigstrangs gegenüber dem zweiten Ende des Teigstrangs versetzt ist, wodurch das erste Ende ein Teigstrang-Fixende und das zweite Ende ein Teigstrang-Schlingende bildet. Vorteilhaft ist ein erster, das Teigstrang-Fixende aufweisender Schenkel des U-förmig gebogenen Teigstrangs kürzer als ein zweiter Schenkel, welcher das Teigstrang-Schlingende umfasst.
- Zum Schlingen einer ersten Teigstrangschlaufe wird das Teigstrang-Fixende wird, von einem ersten Greifermittel des Schlingkopfs aufgenommen und auf dem zweiten Schenkel des U-förmig gebogenen Teigstrangs positioniert, wobei das Greifermittel vorzugsweise eine, in etwa 90° betragende Drehung ausführt. Das Teigstrang-Fixende bildet hierbei einen ersten Kreuzungspunkt mit dem zweiten Schenkel des Teigstrangs, wodurch die erste Teigstrangschlaufe gebildet wird.
- Zum Schlingen einer zweiten Teigstrangschlaufe wird das Teigstrangschlingende von einem zweiten Greifermittel des Schlingkopfs aufgenommen und innerhalb der ersten Teigstrangschlaufe positioniert, wobei das zweite Greifermittel vorzugsweise eine, in etwa 180° betragende Drehung ausführt. Das Teigstrang-Schlingende bildet hierbei einen zweiten Kreuzungspunkt mit der ersten Teigstrangschlaufe.
- Zum Schlingen eines Teigstrangknotens wird ein Abschnitt in einem Bereich der ersten Teigstrangschlaufe von dem Anhebemittel des Verarbeitungstischs in eine Anhebeposition angehoben, sodass zumindest ein Bereich der ersten Teigstrangschlaufe mit einem Abstand zu dem Verarbeitungstisch angeordnet ist. Das Teigstrang-Schlingende wird von dem Tischgreifer des Verarbeitungstischs unter dem angehobenen Teigstrangabschnitt hindurchgeführt und unterteilt hierbei die erste Teigstrangschlaufe in eine erste Teigstrang-Unterschlaufe, die dem ersten Schenkel benachbart ist und eine zweite Teigstrang-Unterschlaufe, die dem zweiten Schenkel benachbart ist. Weiterhin bildet das Teigstrang-Schlingende einen dritten Kreuzungspunkt mit der ersten Teigstrangschlaufe, sodass der Teigstrang eine knotenartige Form aufweist.
- Zum Schlingen einer dritten Teigstrangschlaufe wird das Teigstrang-Schlingende von einem der Greifermittel des Verarbeitungstischs, insbesondere dem ersten Greifermittel aufgenommen, wobei das erste Greifermittel erneut eine in etwa 90° betragende Drehung ausführt. Das Teigstrang-Schlingende wird anschließend innerhalb der ersten Teigstrangschlaufe, vorzugsweise innerhalb der zweiten Teigstrang-Unterschlaufe positioniert, wobei das Greifermittel eine in etwa 180° betragende Drehung ausführt. Ein, dem Teigstrang-Schlingende vorgeordneter Teigstrangabschnitt bildet einen vierten Kreuzungspunkt mit der ersten Teigstrangschlaufe.
- Zum Fixieren und/oder Verfestigen des Teigstrangknotens wird das Teigstrang-Schlingende von dem Verknotungsmittel des Verarbeitungstischs aufgenommen und durch die erste Teigstrangschlaufe hindurchgeführt, insbesondere in Richtung des Verarbeitungstischs. Das Teigstrang-Schlingende wird hierbei, insbesondere unter Ausnutzung der Teigstrang-Elastizität, in einer, die erste Teigstrangschlaufe, vorzugsweise die zweite Teigstrang-Unterschlaufe durchsetzenden Position fixiert.

Das erfindungsgemäße Verfahren eignet sich insbesondere zur Herstellung eines Teigstrangknotens, grundsätzlich ist jedoch auch die Herstellung anderer Teigformen denkbar.

In einem optionalen Verfahrensschritt ist das Verknotungsmittel in den Verarbeitungstisch versenkbar ausgeführt und wird während des Schlingens des Teigstrangknotens aus dem Verarbeitungstisch herausgefahren, sodass das Verknotungsmittel innerhalb der ersten Teigstrangschlaufe, vorzugsweise innerhalb der zweiten Teigstrang-Unterschlaufe positioniert wird.

Um einen möglichst kompakten Teigrohling herzustellen, übt der Tischgreifer während des Schlingens des Teigstrangknotens vorzugsweise eine derartige Zugkraft auf das Teigstrang-Schlingende aus, dass die Öffnung(en) der ersten und/oder der zweiten Teigstrangschlaufe verkleinert und/oder zusammengezogen werden, was im Wesentlichen dem Festziehen bzw. Anziehen eines Knotens entspricht.

Insbesondere werden die Öffnung der zweiten Teigstrangschlaufe und eine Öffnung der ersten Teigstrang-Unterschlaufe verkleinert und/oder zusammengezogen und eine Öffnung der zweiten Teigstrang-Unterschlaufe derart zusammengezogen und/oder verkleinert, dass die zweite Teigstrang-Unterschlaufe das Verknotungsmittel umschlingt und an diesem anliegt, während das Verknotungsmittel aus dem Verarbeitungstisch herausgefahren ist. Das Verknotungsmittel bestimmt somit die Größe der Öffnung der zweiten Teigstrang-Unterschlaufe und fixiert diese in einer geöffneten Position, wohingegen die Öffnungen der weiteren Teigstrangschlaufen enger und/oder vollständig zusammengezogen werden.

Um das Durchziehen des Teigstrang-Schlingendes durch die erste Teigstrangschlaufe zu erleichtern weist das Verknotungsmittel in einem bevorzugten Verfahrensschritt zwei oder mehr Finger auf, die sich während des Schlingens der dritten Teigstrangschlaufe voneinander wegbewegen bzw. entfernen, sodass die Öffnung der ersten Teigstrangschlaufe, vorzugsweise die Öffnung der zweiten Teigstrang-Unterschlaufe gespreizt und/oder gedehnt wird. Unter Ausnutzung der elastischen Eigenschaft des Teigs lässt sich die Teigstrangschlaufen-Öffnung auf diese Weise elastisch vergrößern.

Von besonderem Vorteil ist es, wenn das Verknotungsmittel während des Fixierens und/oder Verfestigens des Teigstrangknotens innerhalb der ersten Teigstrangschlaufe, vorzugsweise innerhalb der zweiten Teigstrang-Unterschlaufe angeordnet ist und dieses zwei oder mehr Finger aufweist, die aus dem Verarbeitungstisch herausragen. Die zwei oder mehr Finger bewegen sich derart aufeinander zu, dass das Teigstrang-Schlingende mittels der Finger aufgenommen wird. Insbesondere wird das Verknotungsmittel, nachdem das Teigstrang-Schlingende von den zwei oder mehr Fingern aufgenommen wurde, in den Verarbeitungstisch versenkt, sodass das Teigstrang-Schlingende von dem Verknotungsmittel durch die erste Teigstrangschlaufe hindurch geführt wird. Das Verknotungsmittel ist nicht länger innerhalb der ersten Teigstrangschlaufe angeordnet, wodurch sich, aufgrund der Teigstrangelastizität, die Öffnung der ersten Teigstrangschlaufe, vorzugsweise der zweiten Teigstrang-Unterschlaufe, um das Teigstrang-Schlingende herum verkleinert und/oder zusammenzieht. Auf diese Weise lässt sich ein Teigstrangende innerhalb einer Teigstrangschlaufe fixieren.

Eine präzise Führung während des Verknotens und/oder Fixierens des Teigstrang-Schlingendes wird insbesondere ermöglicht, indem das Teigstrang-Schlingende von einem der Greifermittel des Schlingkopfes, vorzugsweise dem ersten Greifermittel an das Verknotungsmittel überführt und/oder übergeben wird.

In einem optionalen Verfahrensschritt wird eine optimierte Fixierung des Teigstrang-Schlingendes durch "Andrücken" des vierten Kreuzungspunkts erzielt. Hierzu übt eines der Greifermittel des Schlingkopfes, insbesondere das erste Greifermittel einen Druck auf den vierten Kreuzungspunkt aus. Diejenigen Bereiche des Teigstrangs, die am vierten Kreuzungspunkt angeordnet sind bzw. übereinander liegen, werden auf diese Weise, zumindest lose, miteinander fixiert.

Zur vorteilhaften Durchführung des Verfahrens ist das Teigstrang-Fixende gegenüber dem Teigstrang-Schlingende um 4 - 8 cm, vorzugsweise um 5 - 7 cm versetzt, und/oder der erste Schenkel des U-förmig gebogenen Teigstrangs, der das Teigstrang-Fixende aufweist ist um 4 - 8 cm, vorzugsweise um 5 - 7 cm kürzer als der zweite Schenkel des U-förmig gebogenen Teigstrangs, der das Teigstrang-Schlingende umfasst. Insbesondere wird der U-förmig gebogene Teigstrang bspw. unter Verwendung eines Richtrads ausgerichtet und/oder in Richtung des zweiten Schenkels soweit gedreht, dass das Teigstrang-Fixende 4 - 8 cm, vorzugsweise 5 - 7 cm kürzer ist als das Teigstrang-Schlingende.

Gemäß einer ebenso vorteilhaften Durchführung des Verfahrens nehmen mindestens zwei zueinander versetzt angeordnete Greifermittel des Verarbeitungskopfs die Teigstrangenden in etwa gleichzeitig auf, wobei der Versatz der Greifermittel zueinander in etwa dem Versatz der Teigstrangenden zueinander entspricht und/oder in einem Bereich von 4 - 8 cm, vorzugsweise 5 - 7 cm liegt. Insbesondere sind sowohl die Greifermittel als auch der Verarbeitungskopf selbst, jeweils in einer horizontalen Ebene entlang einer Kreisbahn bewegbar bzw. um eine jeweilige, vertikal in Richtung des Verarbeitungstischs weisende Mittelachse drehbar gelagert. Zur Aufnahme zweier Teigstrangenden werden jeweils zwei Greiferfinger eines Greifermittels in einer Grundstellung derart verstellt, dass die Greiferfinger beidseitig des jeweiligen Teigstrangendes angeordnet und in einer Ebene senkrecht zu diesem ausgerichtet sind. Zur Aufnahme zweier zueinander versetzt ausgerichteter Teigstrangenden ist es also vorteilhaft, dass die Greifermittel in ihrer jeweiligen Grundstellung ebenfalls versetzt zueinander angeordnet sind. Ein einfaches Drehen des Verarbeitungskopfs oder der Greifermittel, ohne den genannten Versatz, zur Ausrichtung der Greiferfinger im Bereich der versetzten Teigstrangenden hätte eine schräge und/oder ungenaue Grundstellung der Greiferfinger bezüglich des aufzunehmenden Teigstrangendes zur Folge.

In einem optionalen Verfahrensschritt, wird der fixierte Teigknotenrohling mittels einer Kompaktierstation einer beidseitigen Druckeinwirkung unterzogen und/oder verdichtet. Insbesondere umfasst die Kompaktierstation mindestens zwei, annähernd parallel zueinander angeordnete, vorzugsweise nachgiebige Aufnahmeflächen um auf beide Seiten des Teigknotenrohlings einen zumindest annähernd gleichförmigen Druck auszuüben. Die Druckeinwirkung führt zu einer Verdichtung sowie zu einer zusätzlichen Fixierung des Teigknotenrohlings, sodass dieser auch nach dem Backvorgang seine kompakte, brötchenartige Form aufweist, ohne dass sich die Teigstrangenden lösen und/oder Öffnungen innerhalb des Rohlings entstehen.

Eine Teigverarbeitungsvorrichtung, die zur Durchführung des beschriebenen Verfahrens geeignet ist, umfasst einen Verarbeitungskopf mit zwei oder mehr Greifermitteln und einen Verarbeitungstisch mit mindestens einem Anhebemittel und/oder mindestens einem Tischgreifer. Insbesondere weist der Verarbeitungstisch zusätzliche Förderbänder auf, die zur Förderung und/oder Führung eines Teigstrangs in einer Förderrichtung, ausgebildet sind. Eine solche Teigverarbeitungsvorrichtung kennzeichnet sich durch mindestens ein, als Verknotungsmittel ausgebildetes Positionierungsmittel, das zum Spreizen und/oder Dehnen einer Öffnung einer Teigstrangschlaufe und zum Durchführen eines der Teigstrangenden durch die Teigstrangschlaufe geeignet ist, sodass das Teigstrangende die Teigstrangschlaufe durchsetzend fixierbar ist. Folglich ist entweder mindestens ein einzelnes Verknotungsmittel zur Ausführung beider oder einer der Funktionen geeignet oder mindestens zwei verschiedene Verknotungsmittel zur Ausführung jeweils einer der Funktionen.

Die Teigverarbeitungsvorrichtung eignet sich insbesondere zur Herstellung eines Teigstrangknotens, grundsätzlich ist jedoch auch die Herstellung anderer Teigformen denkbar.

In vorteilhafter Ausgestaltung ragen zwei oder mehr Finger, die das Verknotungsmittel aufweist, aus dem Verarbeitungstisch der Teigverarbeitungsvorrichtung hervor. Insbesondere sind die zwei oder mehr Finger aufeinander zu und voneinander weg bewegbar ausgebildet, sodass ein Abstand zwischen den Fingern veränderbar ist.

Für die Teigverarbeitungsvorrichtung ist es vorteilhaft, dass das Verknotungsmittel als Spreizgreifer, insbesondere zum Spreizen und/oder Dehnen einer Teigstrangschlaufe und zum Durchführen eines der Teigstrangenden durch die Teigstrangschlaufe ausgebildet ist. Das Verknotungsmittel umfasst in dieser optionalen Ausführung zwei oder mehr Spreizfinger, die aufeinander zu und voneinander weg bewegbar ausgebildet sind, sodass ein Abstand zwischen den Fingern veränderbar ist. Das Verknotungsmittel oder zumindest die Spreizfinger des Verknotungsmittels sind zum Versenken in den Verarbeitungstisch und zum Ausfahren aus dem Verarbeitungstisch ausgebildet.

Ein Tischgreifer, der zum Ziehen eines Teigstrangendes in Zugrichtung und/oder parallel zur Zugrichtung öffenbar und schließbar ist, führt zu einer vorteilhaften Ausgestaltung der Teigverarbeitungsvorrichtung. Weiterhin vorteilhaft weist der Tischgreifer eine Formkante und/oder eine Formkehlung zum Formen einer Teignase an einem der Teigstrangenden auf. Insbesondere umfasst der Tischgreifer zwei Formfinger, die zum Greifen eines Teigstrangendes und zum Ziehen des Teigstrangendes in und/oder entgegen der Förderrichtung ausgebildet sind. Die Formfinger sind vorzugsweise hintereinander bezüglich der Zug- bzw. Förderrichtung angeordnet sowie aufeinander zu und voneinander wegbewegbar, sodass ein Abstand zwischen den Formfingern veränderbar ist. Mindestens ein Formfinger weist eine Formkante und/oder Formkehlung auf, die zur Formung einer Teignase an dem Teigstrangende geeignet ist. Hierzu wird das Teigstrangende an der Formkante geknickt und/oder gebogen und/oder von der Formkehlung aufgenommen. Grundsätzlich ist die Ausbildung einer Formkante und/oder einer Formkehlung nicht auf die Formfinger eines Tischgreifers beschränkt, sondern auf beliebige Greifermittel eines Verarbeitungstischs, insbesondere auf ein Verknotungsmittel anwendbar

In optionaler Ausführung umfasst die Teigverarbeitungsvorrichtung eine Kompaktierstation zum Verdichten des Teigknotenrohlings und/oder zur beidseitigen Druckausübung auf den Teigknotenrohling. Insbesondere umfasst die Kompaktierstation mindestens zwei, annähernd parallel zueinander angeordnete Aufnahmeflächen, die zur Ausübung eines zumindest annähernd gleichförmigen Drucks auf beide Seiten des Teigknotenrohlings vorzugsweise nachgiebig ausgebildet sind. Durch Verwendung einer Kompaktierstation lässt sich eine Ausschussminimierung der hergestellten Teigstrangknotenrohlinge erzielen.

In einer optionalen, platzsparenden Ausgestaltung der Teigverarbeitungsvorrichtung umfassen die zwei oder mehr Greifermittel des Verarbeitungskopfes jeweils einen Stempel und zwei Greiferfinger, wobei der Stempel zwischen den Greiferfingern und/oder in einer Ebene mit den Greiferfingern angeordnet ist. Beispielsweise sind Stempel und Greiferfinger derart angeordnet, dass die Greiferfinger in einer gemeinsamen Ebene aufeinander zu und voneinander weg bewegbar sind und der Stempel innerhalb derselben Ebene, um etwa 90° zur Bewegungsrichtung der Greiferfinger gedreht, bewegbar ist.

Um die Herstellung von Teigformen, insbesondere von Teigstrangknoten in einem kontinuierlichen Prozess zu realisieren, weist der Verarbeitungstisch der Teigverarbeitungsvorrichtung mehrere, im Wesentlichen parallel zueinander angeordnete Förderbänder auf, die einander benachbart sind. Die Förderbänder sind zum Fördern des Teigstrangs in einer Förderrichtung ausgebildet und insbesondere zum Transport des ungeschlungenen Teigstrangs hin zu, bzw. zum Transport des geschlungenen Teigknotenrohlings weg von den Greifermitteln des Verarbeitungskopfs und den Positionierungsmitteln des Verarbeitungstischs. Hierzu ist zumindest ein Teil der Positionierungsmittel zwischen benachbarten Förderbändern angeordnet. Vorteilhafterweise ist mindestens ein zusätzliches Positionierungsmittel als Förderriemen ausgebildet, wobei der Förderriemen zwischen jeweils benachbarten Förderbändern angeordnet ist und an einem der anderen Positionierungsmittel beginnt oder endet bzw. ein anderes Positionierungsmittel am Ende oder zu Beginn des Förderriemens angeordnet ist. Der Förderriemen ist also kürzer ausgeführt als die Förderbänder, sodass eine Ausnehmung am Ende oder zu Beginn des Förderriemens innerhalb des Verarbeitungstischs ausgebildet ist. Die Ausnehmung ist besonders zur Aufnahme eines oder mehrerer Positionierungsmittel geeignet, da hierdurch eine besonders gleichmäßige Förderung des Teigstrangs bis hin zu, oder weg von dem/den entsprechenden Positionierungsmittel(n) erzielbar ist.

Ein als Verknotungsmittel ausgebildetes Positionierungsmittel kennzeichnet sich durch mindestens eine der nachfolgend aufgeführten Verarbeitungsfunktionen und eignet sich für einen Verarbeitungstisch mit mehreren unterschiedlichen Verarbeitungsfunktionen zum Erzeugen mindestens einer Teigstrangschlaufe aus einem Teigstrang. Insbesondere eignet sich das Positionierungsmittel für einen Verarbeitungstisch einer zuvor beschriebenen Teigverarbeitungsvorrichtung und für ein zuvor beschriebenes Verfahren zur Verarbeitung eines Teigstrangs. In einer ersten Verarbeitungsfunktion ist das Positionierungsmittel zum Spreizen und Dehnen einer Teigstrangschlaufe geeignet und ist hierzu im Wesentlichen entlang einer Tischebene des Verarbeitungstischs bewegbar. In einer zweiten Verarbeitungsfunktion ist das Positionierungsmittel zum Durchführen eines Teigstrangendes durch eine Teigstrangschlaufe geeignet und hierzu im Wesentlichen senkrecht zu einer Tischebene des Verarbeitungstischs bewegbar. Mindestens eine Teigstrangschlaufe liegt vorzugsweise auf der Tischebene des Verarbeitungstischs auf, wobei das Positionierungsmittel derart in den Verarbeitungstisch integrierbar ist, dass das Positionierungsmittel innerhalb einer Öffnung der Teigstrangschlaufe anordenbar ist.

In einer optionalen Ausführung des Positionierungsmittels ist dieses als Spreizgreifer derart in den Verarbeitungstisch integrierbar, dass zwei oder mehr Spreizfinger aus dem Verarbeitungstisch vorspringend, vorzugsweise innerhalb einer Teigstrangschlaufe angeordnet sind und im Wesentlichen entlang einer Tischebene des Verarbeitungstischs aufeinander zu sowie voneinander weg bewegbar sind. Durch Öffnen bzw. Schließen der Spreizfinger lässt sich die Öffnung der Teigstrangschlaufe vergrößern bzw. unter Ausnutzung der Teigstrangschlaufenelastizität verkleinern. Zusätzlich oder alternativ ist das Positionierungsmittel als Spreizgreifer derart in den Verarbeitungstisch integrierbar, dass das Positionierungsmittel, insbesondere zwei oder mehr Spreizfinger des Positionierungsmittels, in den Verarbeitungstisch versenkbar sowie aus dem Verarbeitungstisch ausfahrbar ausgebildet sind.

Weitere Einzelheiten, Merkmale, Merkmals(unter)kombinationen, Vorteile und Wirkungen auf der Basis der Erfindung ergeben sich aus der nachfolgenden Beschreibung eines bevorzugten Ausführungsbeispiels der Erfindung und den Zeichnungen. Diese zeigen in:
- Fig. 1a - f schematisch einen Schlingvorgang zur Herstellung eines Teigstrangknotens,
- Fig. 2 eine perspektivische Darstellung einer Teigverarbeitungsvorrichtung mit einem Verarbeitungskopf und einem Verarbeitungstisch in einer Grund- bzw. Ausgangsstellung,
- Fig. 3 - 18 jeweils eine perspektivische Darstellung der Teigverarbeitungsvorrichtung aus Fig. 2 in verschiedenen Stellungen zur Durchführung eines Herstellungsverfahrens für einen Teigknoten.

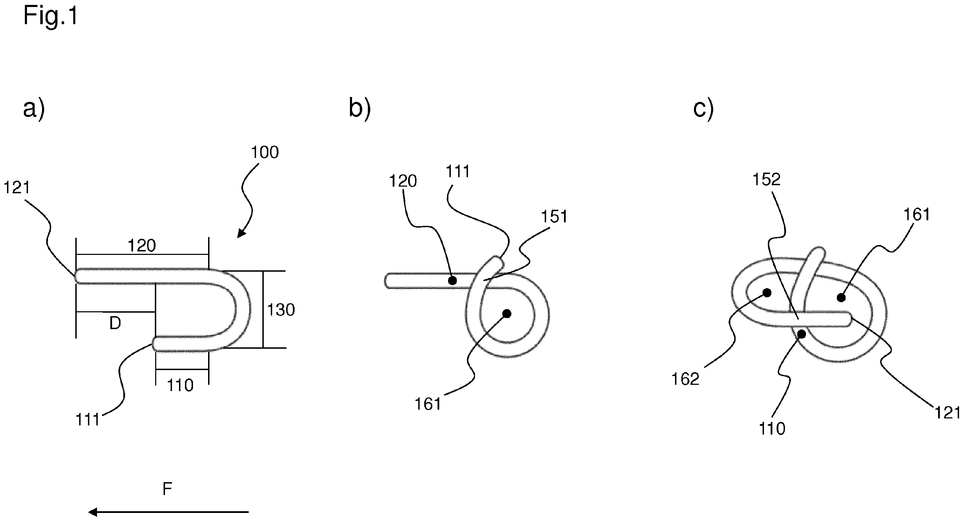

Gemäß Figur 1a weist ein U-förmig gebogener Teigstrang 100 einen ersten Schenkel 110 mit einem Teigstrang-Fixende 111, einen zweiten Schenkel 120 mit einem Teigstrang-Schlingende 121 sowie einen dazwischen liegenden, kreisbogenförmigen Abschnitt 130 auf. Zur maschinellen Herstellung eines Teigstrangknotens 140 wird der Teigstrang 100 derart ausgerichtet, dass die Schenkel 110, 120 in eine Förderrichtung F weisen und zueinander parallel verlaufen, wobei der zweite Schenkel 120 den ersten Schenkel 110 um die Distanz D überragt bzw. das Teigstrang-Schlingende 121 dem Teigstrang-Fixende 111 in Förderrichtung F vorauseilt.

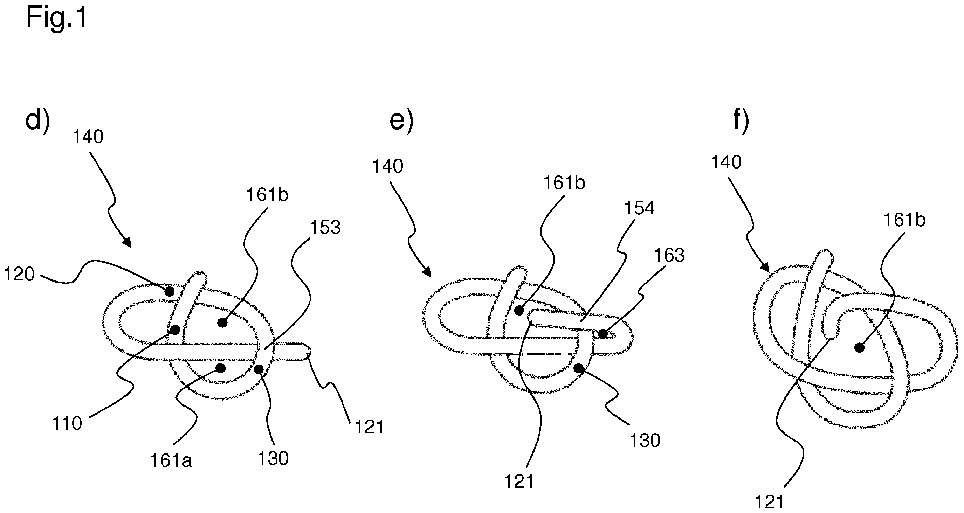

Nach Figur 1b ist das Teigstrang-Fixende 111 in etwa um 90° gebogen und auf dem zweiten Schenkel 120 positioniert, sodass ein erster Kreuzungspunkt 151 zwischen dem Teigstrang-Fixende 111 und dem zweiten Schenkel 120 sowie eine erste Teigstrangschlaufe 161 ausgebildet ist. Das Teigstrang-Fixende 111 verbleibt bis zur Beendigung des Schlingvorgangs in der gezeigten Position. Wie aus Figur 1c zu entnehmen ist, entsteht eine zweite Teigstrangschlaufe 162, indem das Teigstrang-Schlingende 121 in etwa um 180° gebogen und innerhalb der ersten Teigstrangschlaufe 161 platziert wird. In einem hieraus resultierenden, zweiten Kreuzungspunkt 152, verläuft das Teigstrang-Schlingende 121 oberhalb des in etwa rechtwinklig gebogenen, ersten Schenkels 110. Ein Teigstrangknoten 140 ist in Figur 1d dargestellt. Das Teigstrang-Schlingende 121 wird hierzu unterhalb des kreisbogenförmigen Abschnitts 130 hindurchgeführt und bildet mit diesem einen dritten Kreuzungspunkt 153. Gleichzeitig wird die erste Teigstrangschlaufe 161 durch das Teigstrang-Schlingende 121 in eine erste Teigstrang-Unterschlaufe 161a, die dem ersten Schenkel 110 zugeordnet ist und eine zweite Teigstrang-Unterschlaufe 161b, die dem zweiten Schenkel 120 zugeordnet ist unterteilt.

Gemäß Figur 1e entsteht eine dritte Teigstrangschlaufe 163, indem das Teigstrang-Schlingende 121 ein weiteres Mal um in etwa 180° gebogen und innerhalb der ersten Teigstrangschlaufe 161, genauer innerhalb der zweiten Teigstrang-Unterschlaufe 161b platziert wird. In einem resultierenden, vierten Kreuzungspunkt 154, verläuft das Teigstrang-Schlingende 121 oberhalb des kreisbogenförmigen Abschnitts 130. Zur Fixierung des Teigstrangknotens 140 wird, wie in Figur 1f dargestellt, das Teigstrang-Schlingende 121 senkrecht zur Teigstrangknotenebene durch die zweite Teigstrang-Unterschlaufe 161b geführt. Die Figuren 1a - 1f stellen den Schlingvorgang eines Teigstrangknotens 140 lediglich schematisch, mit stark vergrößerten Teigstrangschlaufen 161, 162, 163 dar. In der automatisierten, maschinellen Herstellung von Teigstrangknotenrohlingen sollen Öffnungen im Teigstrangknotenrohling weitestgehend vermieden werden.

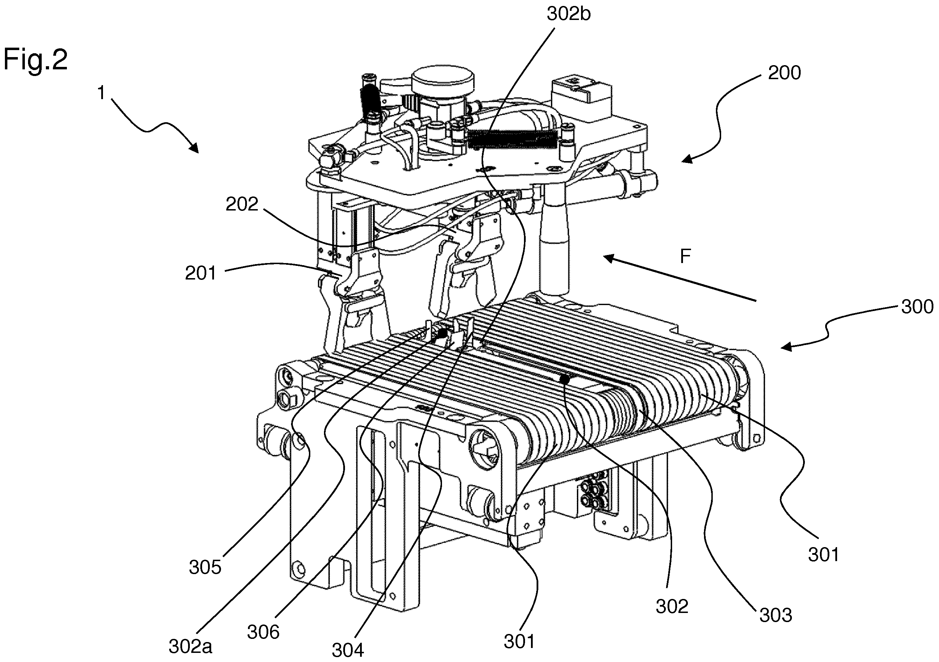

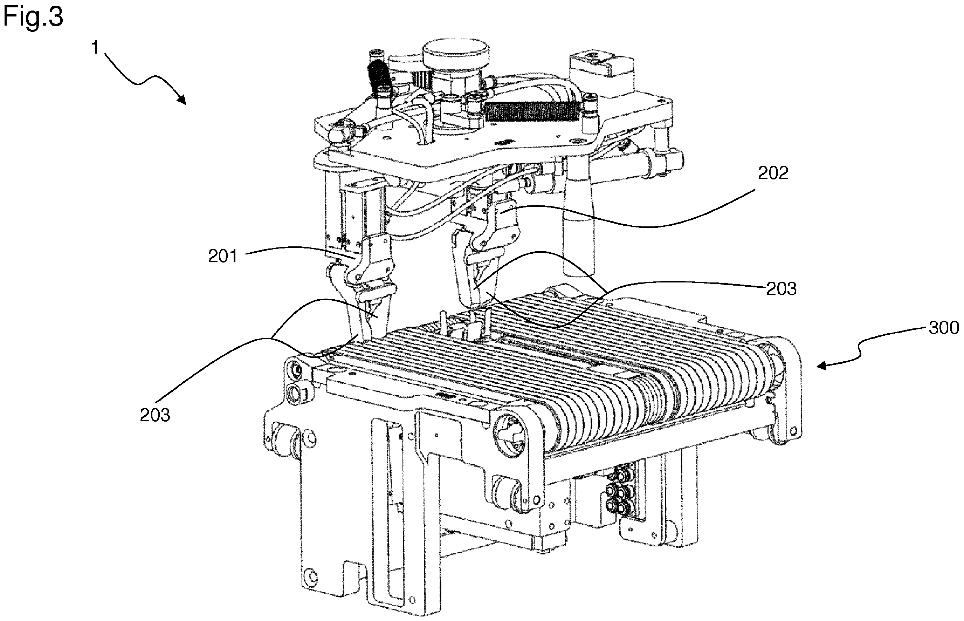

Eine perspektivische Ansicht der Grundstellung bzw. Ausgangsstellung einer Teigverarbeitungsvorrichtung 1 ist in Figur 2 dargestellt. Die Teigverarbeitungsvorrichtung 1 eignet sich zur Herstellung eines fixierten Teigstrangknotenrohlings 140, gemäß Figur 1f aus einem U-förmig ausgerichteten Teigstrang 100, gemäß Figur 1a. Die erforderlichen Stellungen und Funktionen der Teigverarbeitungsvorrichtung 1, zur Ausführung des Schlingvorgangs (s. Figuren 1a - 1f), sind in den Figuren 3 - 18, jedoch ohne Darstellung des Teigstrangs 100 gezeigt.

Die Teigverarbeitungsvorrichtung 1 ist Bestandteil einer Anlage zur Durchführung eines kontinuierlichen Teigknotenherstellungsprozesses und insbesondere einer Ausrichtstation mit einem Richtrad zur Ausrichtung eines Teigstrangs gemäß Fig. 1a nachgeschaltet bzw. einer Kompaktierstation zum Verdichten des geschlungenen Teigknotenrohlings vorgeschaltet. Die Teigverarbeitungsvorrichtung 1 umfasst einen Verarbeitungskopf 200, der oberhalb des Teigstrangs 100 angeordnet ist und einen Verarbeitungstisch 300, der unterhalb des Teigstrangs 100 angeordnet ist. Der Verarbeitungskopf 200 ist vornehmlich zum Aufnehmen und Schlingen der Teigstrangenden 111, 121 ausgebildet, wohingegen der Verarbeitungstisch 300 zusätzlich zum Transport und zur Auflage des Teigstrangs 100 in einer horizontalen Förderrichtung F sowie zur Positionierung des Teigstrangs 100 geeignet ist.

Ein Verarbeitungskopf für eine Teigverarbeitungsvorrichtung sowie dessen grundlegende Funktionsweise ist bereits aus der EP 2 618 670 B1 bekannt. Der in den Figuren 2 - 18 dargestellte Verarbeitungskopf 200 weist jedoch wesentliche Unterschiede, die insbesondere zur Herstellung eines Teigstrangknotens 140 angepasst sind auf. So umfasst der Verarbeitungskopf 200 zwei, einander benachbarte, jedoch in Förderrichtung F zueinander versetzte Greifermittel 201, 202. Ein erstes Greifermittel 201 ist in einem Bereich zum Greifen des Teigstrang-Fixendes 111, bezüglich der Förderrichtung F vor einem zweiten Greifermittel 202 angeordnet, welches sich in einem Bereich zum Greifen des Teigstrang-Schlingendes 121 befindet. Der Versatz der Greifermittel 201, 202 entspricht in etwa der Distanz D zwischen dem Teigstrang-Schlingende 121 und dem Teigstrang-Fixende 111 (s. Figur 1a).

Aus der EP 2 618 670 B1 ist ebenfalls ein Verarbeitungstisch für eine Teigverarbeitungsvorrichtung bekannt, von dem sich jedoch der in den Figuren 2 - 18 dargestellte Verarbeitungstisch 300 in grundlegenden, nachfolgend beschriebenen Funktionen und Vorrichtungen wesentlich unterscheidet. Der Verarbeitungstisch 300 umfasst eine Vielzahl benachbarter, zueinander parallel angeordneter Förderbänder 301, die in einer gemeinsamen Förderrichtung F betrieben werden. Ein mittig, zwischen den Förderbändern 301 angeordneter Verarbeitungsbereich 302 ist zur Aufnahme verschiedener Positionierungsmittel 303, 304, 305, 307, 308 ausgebildet. Der Verarbeitungsbereich 302 umfasst einen verkürzten Förderriemen 303, der parallel zu den Förderbändern 301 verläuft und in einem hinteren Abschnitt 302a des Verarbeitungsbereichs 302 endet. Um den kreisbogenförmigen Abschnitt 130 des Teigstrangs 100 präzise an den Positionierungsmitteln 304, 305, 306, 307 zu positionieren endet der verkürzte Förderriemen 303 an einer Ausnehmung 302b die zur Aufnahme, zumindest der Positionierungsmittel 304, 308 ausgebildet ist. Um die verschiedenen Teigstrangschlaufen 161, 162, 163, die während des Schlingvorgangs gebildet werden an ihrer jeweils vorgesehenen Position zu halten, bzw. um die Teigstrangenden 111, 121 des Teigstrangs 100 zu fixieren weist der Verarbeitungstisch 300 eine Haltegabel 304, einen Haltestift 305 und einen Tischgreifer 306 auf, die in dem hinteren Abschnitt 302a des Verarbeitungsbereichs 302 angeordnet sind und aus dem Verarbeitungstisch 300 herausragen. Die Haltegabel 304 und der Haltestift 305 sind jeweils vertikal bewegbar und innerhalb des Verarbeitungstischs 300 versenkbar bzw. aus diesem ausfahrbar. Bezüglich der Förderrichtung F befindet sich der Haltestift 305 hinter dem Tischgreifer 306. Die Haltegabel 304 ist in etwa auf gleicher Höhe mit dem Tischgreifer 306, am Ende des Förderriemens 303 innerhalb der Ausnehmung 302b angeordnet.

Während des Schlingvorgangs wird zunächst der bereits ausgerichtete Teigstrang 100 (s. Figur 1a) mittels der Förderbänder 301 in Förderrichtung F zur Aufnahme durch die Greifermittel 201, 202 gefördert, wobei das Teigstrang-Fixende 111 zwischen zwei Greiferfingern 203 des ersten Greifermittels 201 und das Teigstrang-Schlingende 121 zwischen zwei Greiferfingern 203 des zweiten Greifermittels 202 positioniert wird. Eine Erkennung der exakten Positionierung der Teigstrangenden 111, 121 und/oder des Zeitpunkts zum Anhalten der Förderbänder erfolgt vorzugsweise unter Zuhilfenahme optischer Sensoren.

In Figur 3 sind die Greifermittel 201, 202 der Teigverarbeitungsvorrichtung 1 in einer, die Teigstrangenden 111, 121 greifenden bzw. geschlossenen Stellung dargestellt. Die Greifermittel 201, 202 umfassen jeweils zwei Greiferfinger 203 die um eine jeweilige Achse verschwenkbar sind, sodass die Greiferfinger 203 zur Aufnahme der Teigstrangenden 111, 121 aufeinander zu bewegt bzw. geschlossen werden können und zur Freigabe der Teigstrangenden 111, 121 voneinander weg bewegt bzw. geöffnet werden können. Die Greifermittel 201, 202 sind ebenfalls zur Aufnahme bzw. zur Freigabe der Teigstrangenden 111, 121 vertikal nach oben, in eine von dem Verarbeitungstisch 300 beabstandete Stellung bzw. vertikal nach unten, in Richtung des Verarbeitungstischs 300 verfahrbar.

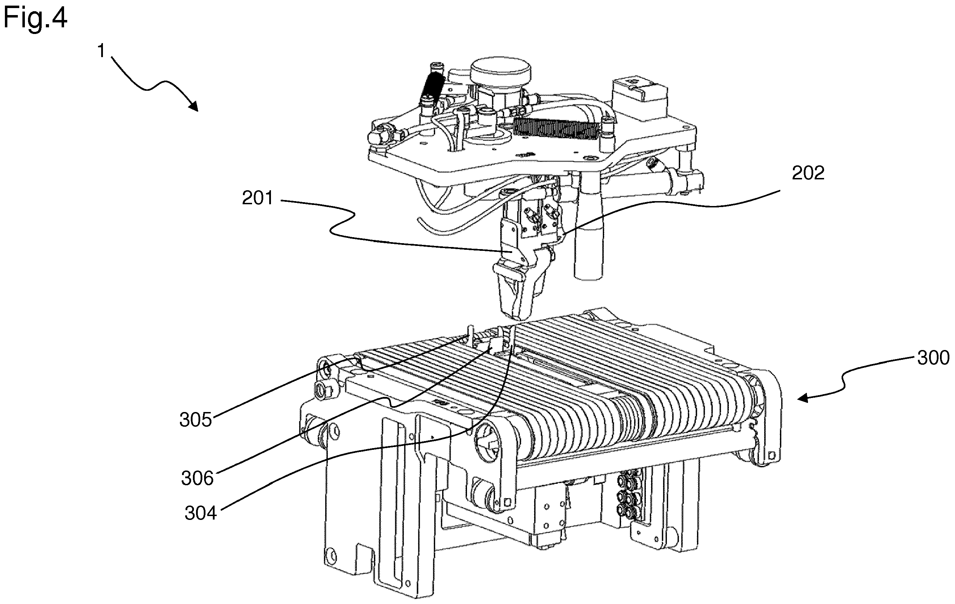

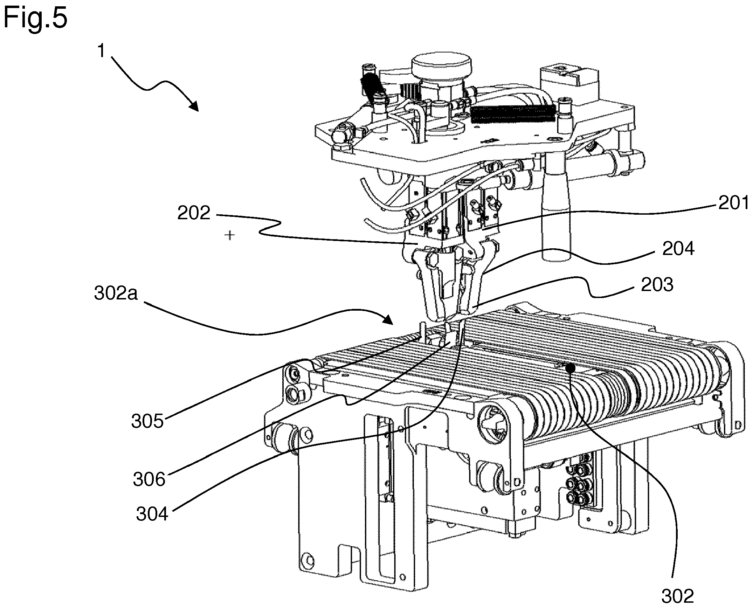

Wie in den Figuren 4 und 5 zu erkennen, sind die Greifermittel 201, 202 ebenfalls horizontal schwenk- bzw. drehbar. Gemäß Figur 4 ist das erste Greifermittel 201 in einer um 90° zur Grundstellung gedrehten Stellung sowie nach oben gefahrenen Position gezeigt, sodass das Teigstrang-Fixende 111 oberhalb des zweiten Schenkels 120 des U-förmig gebogenen Teigstrangs 100 und in einem Bereich des ersten Kreuzungspunkts 151 positioniert ist. Die hierbei gebildete, erste Teigstrangschlaufe 161 (s. a. Fig. 1a) umgibt die Haltegabel 304, den Haltestift 305 sowie den Tischgreifer 306, wodurch die Öffnungsgröße der ersten Teigstrangschlaufe 161 festgelegt und fixiert wird. Folglich befindet sich der Tischgreifer 306 innerhalb der ersten Teigstrangschlaufe 161.

Gemäß Figur 5 ist das zweite Greifermittel 202 in einer um 180° zur Grundstellung gedrehten sowie nach oben gefahrenen Position gezeigt, sodass das Teigstrang-Schlingende 121 oberhalb des Tischgreifers 306 bzw. oberhalb einer Öffnung der ersten Teigstrangschlaufe 161 positioniert ist, wobei eine zweite Teigstrangschlaufe 162 gebildet wird (s. a. Fig. 1c). In dieser Stellung der Teigverarbeitungsvorrichtung 1 sind die Greifermittel 201, 202 direkt aneinander grenzend, oberhalb des hinteren Abschnitts 302a des Verarbeitungsbereichs 302 angeordnet. Mittels einer Kröpfung 204 der Greiferfinger 203 des ersten Greifermitttels 201 in Richtung des zweiten Greifermittels 202 wird die erforderliche Positionierung des Teigstrang-Fixendes 111 oberhalb des zweiten Schenkels 120 dennoch ermöglicht. In der soeben beschriebenen Stellung der Teigstrangschlingvorrichtung 1 befinden sich die Teigstrangenden 111, 121 in einer angehobenen Position, wohingegen der kreisbogenförmige Abschnitt 130 sowie zumindest Teilabschnitte des ersten und des zweiten Schenkels 110, 120 weiterhin auf dem Verarbeitungstisch 300 aufliegen.

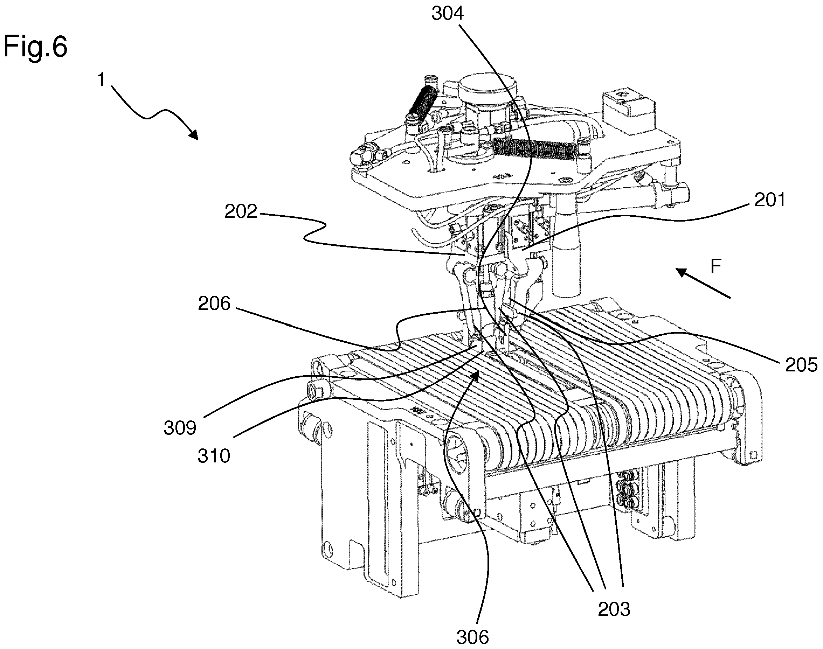

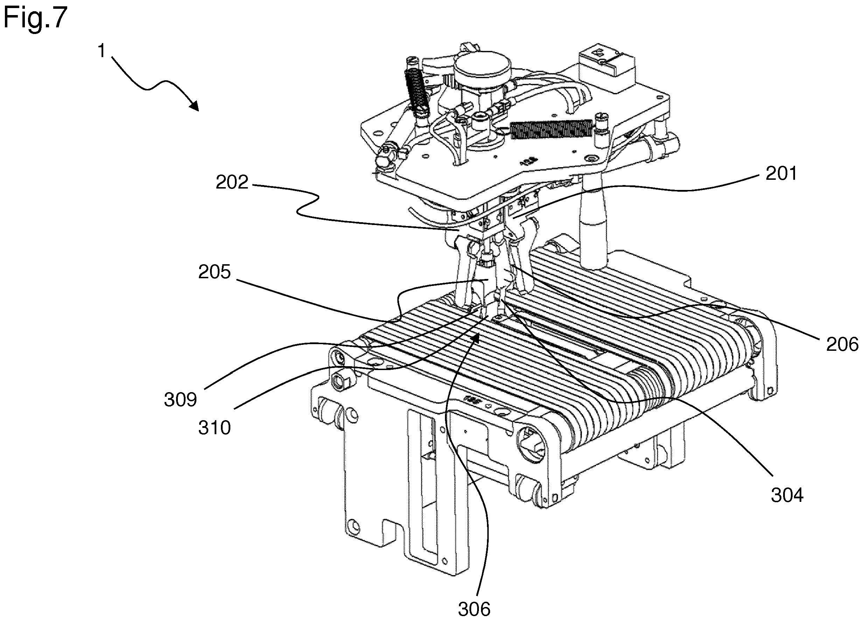

Die Figuren 6 und 7 zeigen jeweils die Teigverarbeitungsvorrichtung 1 in einer Stellung zum Ausstoßen bzw. zur Freigabe der Teigstrangenden 111, 121 aus den Greifermitteln 201, 202. Hierzu ist ein Schiebemittel, ein sogenannter Stempel 205 bzw. 206 jeweils zwischen den Greiferfingern 203 der Greifermittel 201 bzw. 202 angeordnet. Die Stempel 205, 206 sind dazu vorgesehen, bei gleichzeitigem Öffnen der Greiferfinger 203, die Teigstrangenden 111, 121 aus dem jeweiligen Greifermittel 201, 202 auszustoßen, wozu die Stempel 205, 206 eine vertikale Schiebbewegung ausführen. Der Stempel 206 des zweiten Greifermittels 202 ist oberhalb des Tischgreifers 306 angeordnet. Mittels einer vertikalen Schiebbewegung des Stempels 206 lässt sich das Teigstrang-Schlingende 121 zwischen zwei Formfingern 309, 310 des Tischgreifers 306 positionieren. Mittels einer vertikalen Schiebbewegung des Stempels 205 wird das Teigstrang-Fixende 111 hingegen auf dem zweiten Schenkel 120 platziert. Die Haltegabel 304 stellt zusätzlich sicher, dass das Teigstrang-Fixende 111 in der gewünschten Positionierung ausgestoßen wird, indem der Teigstrang 100 zwischen zwei, entlang der Förderrichtung F angeordneten Zinken der Haltegabel 304 verläuft. Der Stempel 205 übt im Bereich des ersten Kreuzungspunkts 151 zusätzlich einen Druck auf die sich überkreuzenden Teigstrangabschnitte aus, wodurch das Teigstrang-Fixende 111 zumindest lose fixiert wird. In dieser Stellung der Teigverarbeitungsvorrichtung 1 entspricht die Form des Teigstrangs 100 schematisch der Figur 1c.

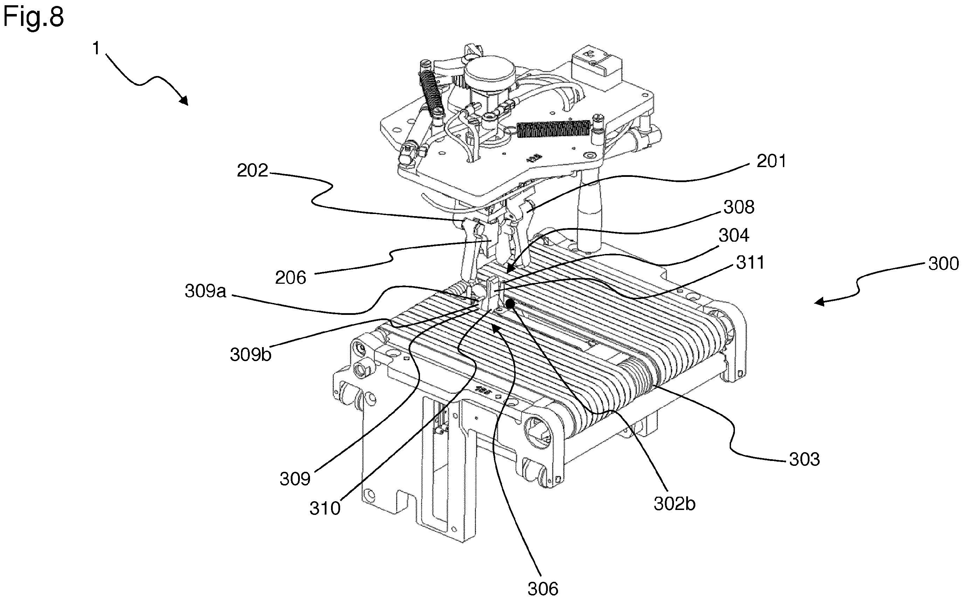

In Figur 8 sind die Greifermittel 201, 202 sowie die Stempel 205, 206 vertikal nach oben gefahren. Die Formfinger 309, 310 des Tischgreifers 306 zum Aufnehmen des Teigstrang-Schlingendes 121 sind geschlossen, d. h., die Formfinger 309, 310 befinden sich in einer, um eine rechtwinklig zur Förderrichtung F liegende Achse, aufeinander zu geschwenkten Stellung. Bezüglich der Förderrichtung F ist ein erster Formfinger 309 hinter einem zweiten Gegenformfinger 310 angeordnet. Der Formfinger 309 weist eine Formkante 309a und eine Formkehlung 309b auf, die zur Ausbildung einer Teignase an einem Teigstrangende 111, 121 geeignet sind. Während das Teigstrang-Schlingende 121 von den Formfingern 309, 310 des Tischgreifers 306 aufgenommen wird, wird der Teigstrang 100 an der Formkante 309a des Formfingers 309 in etwa um 90° in eine unterhalb der Formkante 309a angeordnete Formkehlung 309b gebogen. Aufgrund eines Gegendrucks, den der Gegenformfinger 310 auf das gebogene Teigstrang-Schlingende 121 ausübt lässt sich eine plastische Verformung am Teigstrang-Schlingende 121 erzielen. Grundsätzlich ist die Ausbildung einer Formkante 309a und/oder einer Formkehlung 309b nicht auf die Formfinger 309, 310 eines Tischgreifers 306 beschränkt, sondern auf beliebige Greifermittel eines Verarbeitungstischs 300, insbesondere auf ein Verknotungsmittel 308 anwendbar.

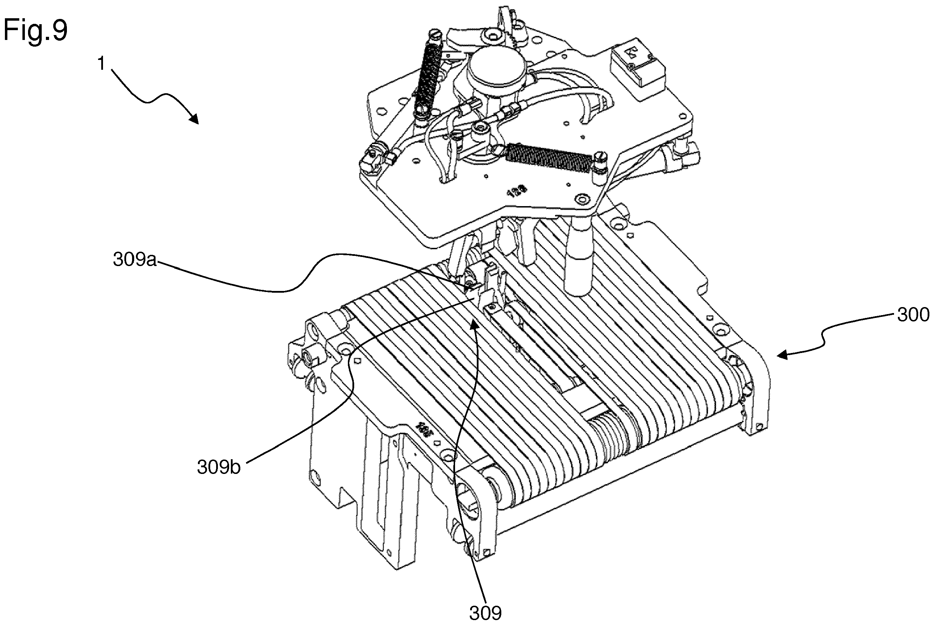

Ebenfalls in Figur 8 ist ein Verknotungsmittel 308 am Ende des Förderriemens 303 innerhalb der Ausnehmung 302b des Verarbeitungsbereichs 302 in dem Verarbeitungstisch 300 angeordnet. Das Verknotungsmittel 308 ist vertikal nach oben bzw. unten bewegbar ausgebildet und lässt sich aus dem Verarbeitungstisch 300 ausfahren bzw. in diesen versenken. Zwei Spreizfinger 311 des Verknotungsmittels 308 sind zwischen dem Tischgreifer 306 und der Haltegabel 304 innerhalb der ersten Teigstrangschlaufe 161 angeordnet. Die Spreizfinger 311 sind um eine, 90° zur Förderrichtung F versetzt liegende Achse verschwenkbar bzw. aufeinander zu und voneinander weg bewegbar. Figur 8 zeigt die Spreizfinger 311 in einer geschlossenen, d.h. aufeinander zu bewegten Stellung. Figur 9 zeigt die Stellung der Teigverarbeitungsvorrichtung 1 gemäß Figur 8 aus einer perspektivischen Draufsicht zur besseren Darstellung der Formkante 309a sowie der Formkehlung 309b des Formfingers 309.

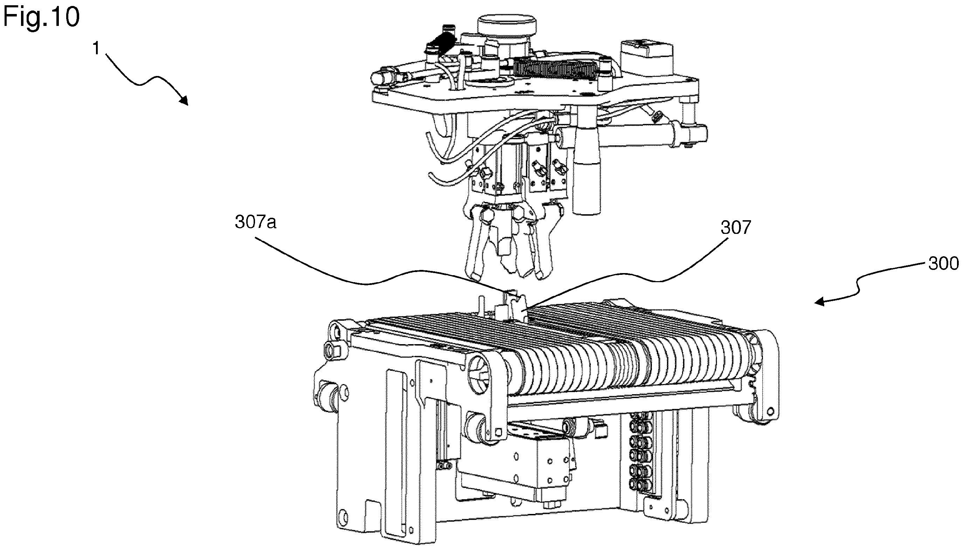

Eine perspektivische Seitenansicht gemäß Figur 10 zeigt ein Anhebemittel 307, das zum Anheben eines Abschnitts des Teigstrangs 100, insbesondere des kreisbogenförmigen Abschnitts 130 aus dem Verarbeitungstisch 300 aus- bzw. einfahrbar ist. In Figur 10 befindet sich das Anhebemittel 307 in einer schräg aus dem Verarbeitungstisch 300 ausgefahrenen Stellung, wobei der Winkel zwischen Anhebemittel 307 und Verarbeitungstisch 300 z. B. um 10° - 45° von einem senkrechten Winkel abweicht. Das Anhebemittel 307 weist entlang seiner oberen Kante eine Kehlung 307a zur Aufnahme eines Teigstrangabschnitts auf. In ausgefahrener Stellung wird so der kreisbogenförmige Abschnitt 130 in einer zum Verarbeitungstisch 300 beabstandeten Position angeordnet, wobei der Abstand mindestens dem Durchmesser des Teigstrangs 100 entspricht, sodass ein Teigstrangende 111, 121 unterhalb des angehobenen Bereichs durchführbar ist.

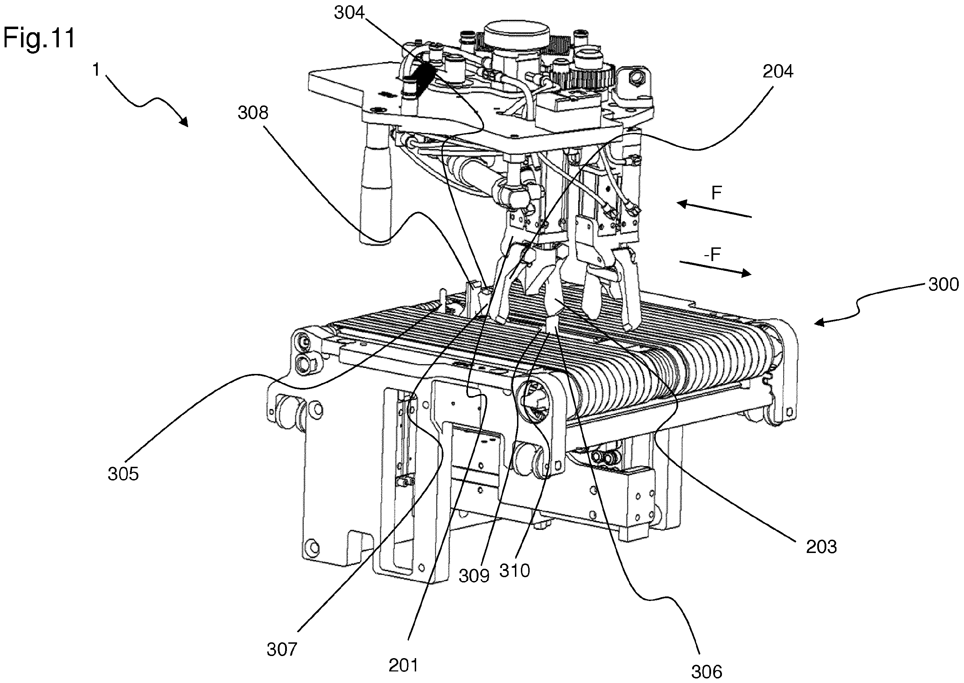

Gemäß Figur 11 ist der Tischgreifer 306 entlang der Förderrichtung F verschiebbar und befindet sich in einer, bezüglich der Förderrichtung F, vorderen Stellung. Das Anhebemittel 307 positioniert den kreisbogenförmigen Abschnitt 130 bzw. einen Abschnitt der ersten Teigstrangschlaufe 161 in einer bezüglich des Verarbeitungstischs 300 angehobenen Position, sodass der Tischgreifer 306 aus dem Inneren der ersten Teigstrangschlaufe 161, unterhalb des kreisbogenförmigen Abschnitts 130 hindurch, in einer, der Förderrichtung F entgegengesetzten Zugrichtung -F verfahrbar ist. Die Formfinger 309, 310 befinden sich in einer, um das Teigstrang-Schlingende 121 geschlossenen Stellung, wodurch das Teigstrang-Schlingende 121 durch die erste Teigstrangschlaufe 161 in Zugrichtung -F hindurchgezogen und dabei gedehnt wird. Der Tischgreifer 306 übt eine in Richtung der Zugrichtung -F gerichtete Zugkraft auf das Teigstrang-Schlingende 121 aus, wodurch sich die zweite Teigstrangschlaufe 162, die nicht von Haltemitteln offen gehalten wird, um das Teigstrang-Fixende 111 herum zusammenzieht bzw. schließt. Gleichzeitig entsteht ein dritter Kreuzungspunkt 153, zwischen der ersten Teigstrangschlaufe 161 und dem Teigstrang-Schlingende 121. Weiterhin wird die erste Teigstrangschlaufe 161 von einem, die Teigstrangschlaufe 161 durchquerenden Teigstrangabschnitt in zwei Teigstrang-Unterschlaufen 161a, 161 b geteilt. Der Haltestift 305 ist somit innerhalb der ersten Teigstrang-Unterschlaufe 161a angeordnet, die Haltegabel 304 sowie das Verknotungsmittel 308 innerhalb der zweiten Teigstrang-Unterschlaufe 161b. Aufgrund der durch den Tischgreifer 306 ausgeübten Zugkraft ziehen sich die Teigstrang-Unterschlaufen 161a bzw. 161b um die jeweiligen Positionierungsmittel 305 bzw. 304, 308 zusammen. Das erste Greifermittel 201 ist in einer um 180° zur Ausgangs- bzw. Grundstellung (s. Figur 2) gedrehten Stellung oberhalb des Tischgreifers 306 angeordnet, wobei die Greiferfinger 203 geöffnet und um den Betrag der Kröpfung 204 in Förderrichtung F versetzt sind. Die Form des Teigstrangs 100 entspricht in dieser Stellung schematisch der Figur 1d.

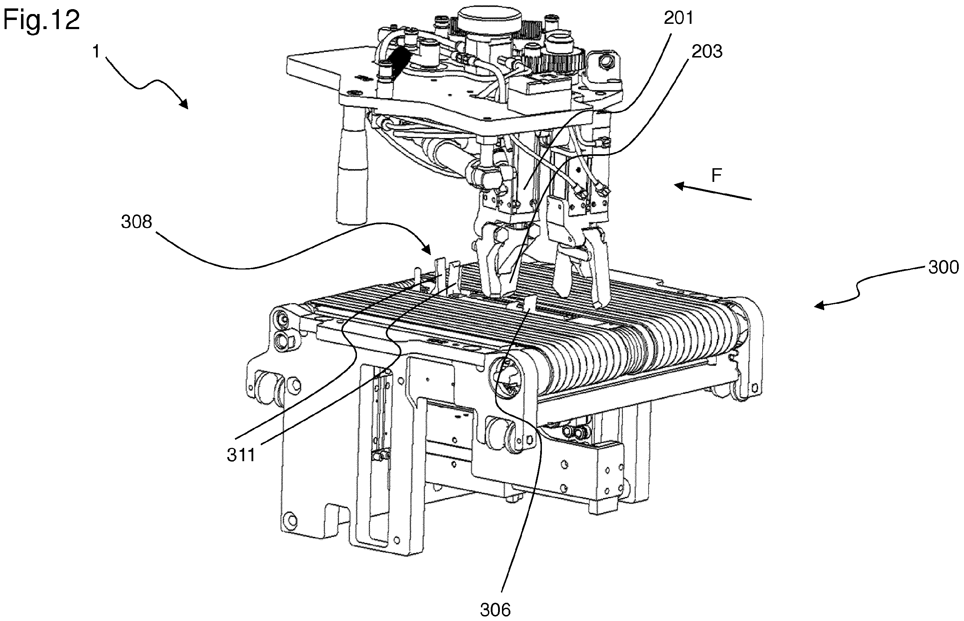

Figur 12 zeigt die Greiferfinger 203 des ersten Greifermittels 201 in geschlossener Stellung, wodurch ein Abschnitt des Teigstrangs 100 oberhalb des Teigstrang-Schlingendes 121 bzw. bezüglich der Förderrichtung F nach dem Tischgreifer 306 durch das Greifermittel 201 aufgenommen wird. Der Tischgreifer 306 befindet sich in einer geöffneten Stellung um das Teigstrang-Schlingende 121 freizugeben. Vorzugsweise ist der Haltestift 305 in den Verarbeitungstisch 300 versenkt. Das Anhebemittel 307 ist in den Verarbeitungstisch 300 versenkt, sodass der kreisbogenförmige Abschnitt 130 des Teigstrangs 100 nicht länger in einer angehobenen Stellung gehalten wird bzw. auf dem Verarbeitungstisch 300 aufliegt.

Das Verknotungsmittel 308, welches innerhalb der zweiten Teigstrang-Unterschlaufe 161b angeordnet ist, weist eine geöffnete Stellung auf. Hierzu sind die Spreizgreifer 311 jeweils um eine senkrecht zur Förderrichtung F angeordnete Achse voneinander weg geschwenkt, sodass der Abstand zwischen den Spreizgreifern entlang der Förderrichtung F vergrößert ist. Mittels der Spreizgreifer 311 wird die zweite Teigstrang-Unterschlaufe 161b, die um das Verknotungsmittel 308 herum zugezogen ist, unter Ausnutzung der Teigstrangelastizität gespreizt bzw. gedehnt. Entsprechend wird die Öffnung der zweiten Teigstrang-Unterschlaufe 161b vergrößert, um ein Durchführen des Teigstrang-Schlingendes 121 durch die zweite Teigstrang-Unterschlaufe 161b zu erleichtern.

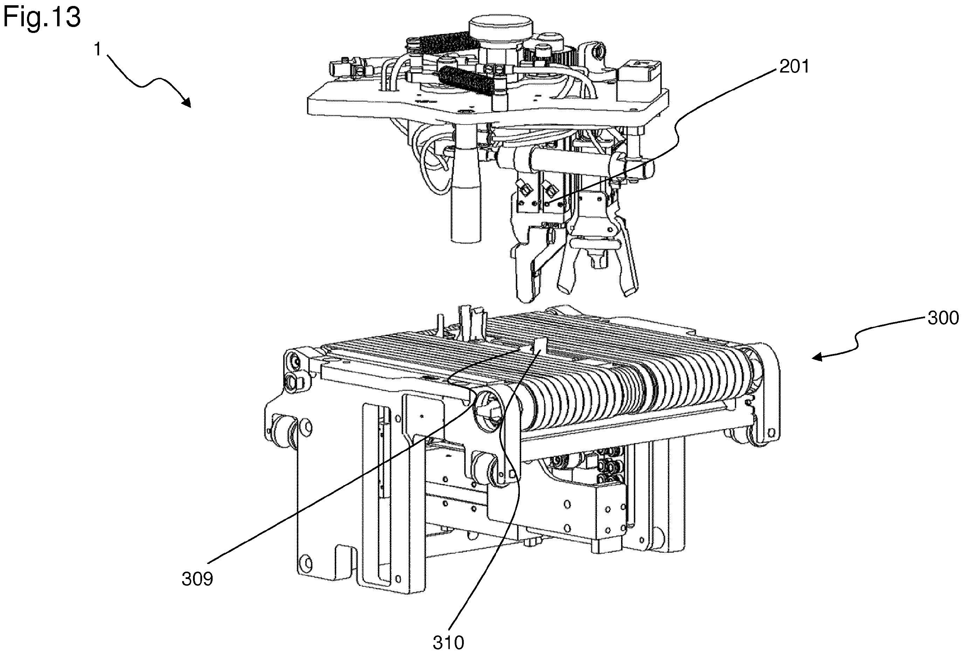

Gemäß Figur 13 befindet sich das Greifermittel 201 in einer vertikal nach oben gefahren Stellung, wodurch das Teigstrang-Schlingende 121 eine vom Verarbeitungstisch 300 beabstandete Position aufweist. Während der angehobene Bereich des Teigstrangs 100 im Wesentlichen parallel und/oder schräg zum Verarbeitungstisch verläuft, weist die Teignase, die mittels der Formfinger 309, 310 am Teigstrang-Schlingende 121 ausgebildet wurde, im Wesentlichen senkrecht in Richtung des Verarbeitungstischs 300.

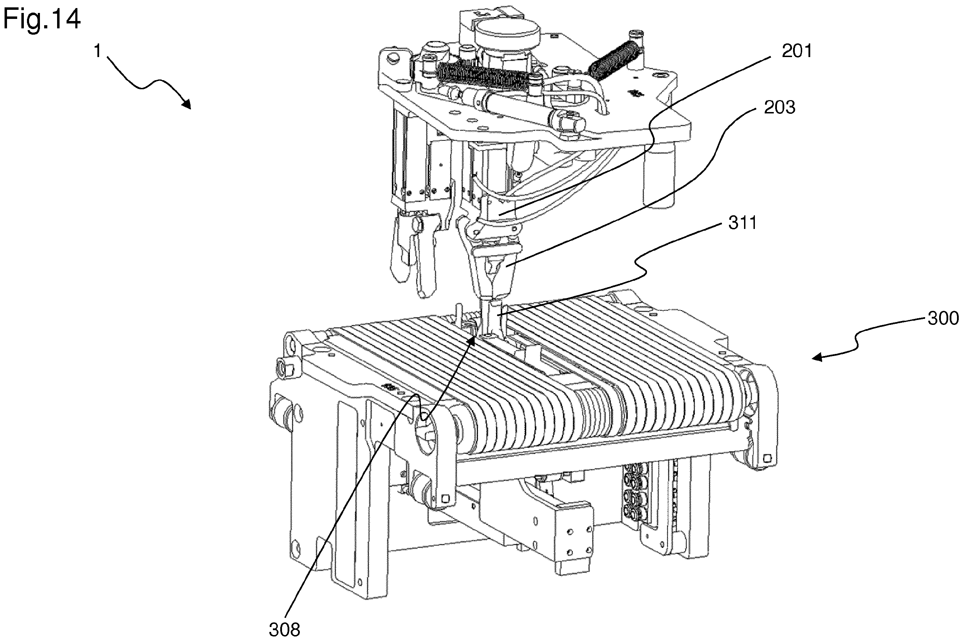

Das erste Greifermittel 201 ist in Figur 14 um 180° bezüglich der vorherigen Stellung horizontal gedreht, sodass sich die geschlossenen Greiferfinger 203 des Greifermittels 201 oberhalb der geöffneten Spreizfinger 311 des Verknotungsmittels 308 befinden. Die nach unten weisende Teignase kann auf diese Weise zwischen den Spreizfingern 311 des Verknotungsmittels 308, innerhalb der zweiten Teigstrang-Unterschlaufe 161b positioniert werden. Bezüglich der Förderrichtung F entsteht so eine dritte Teigstrangschlaufe 163 vor der ersten Teigstrangschlaufe 161. Im Bereich eines vierten Kreuzungspunkts 154 verläuft ein, dem Teigstrang-Schlingende 121 nachgeordneter Teigstrangabschnitt oberhalb des kreisbogenförmigen Abschnitts 130 (s. a. Fig. 1e).

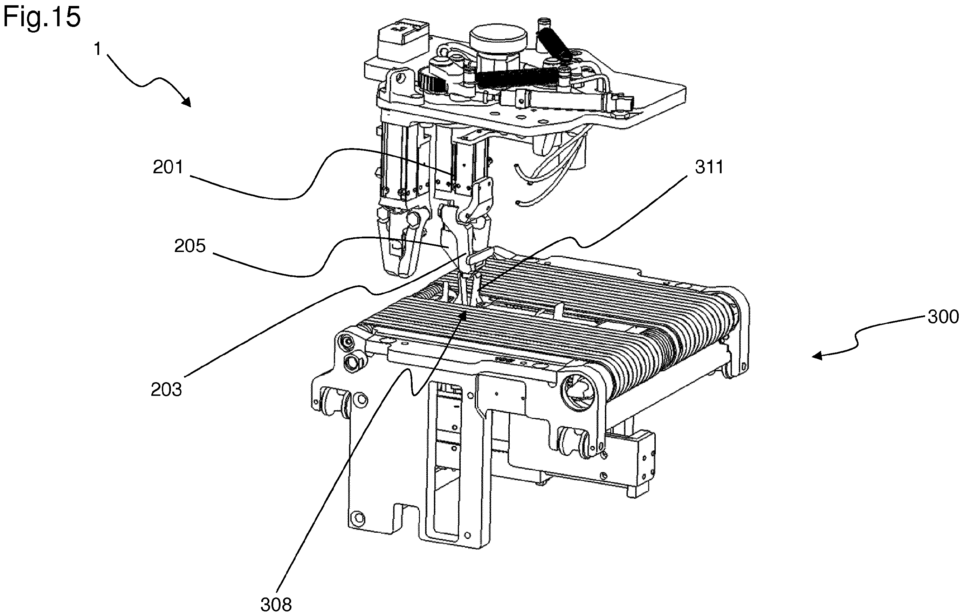

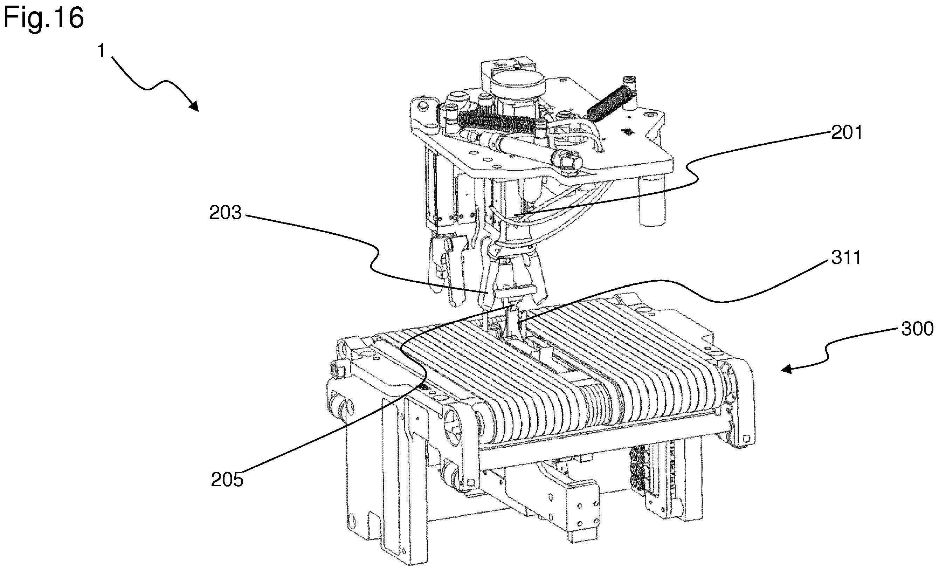

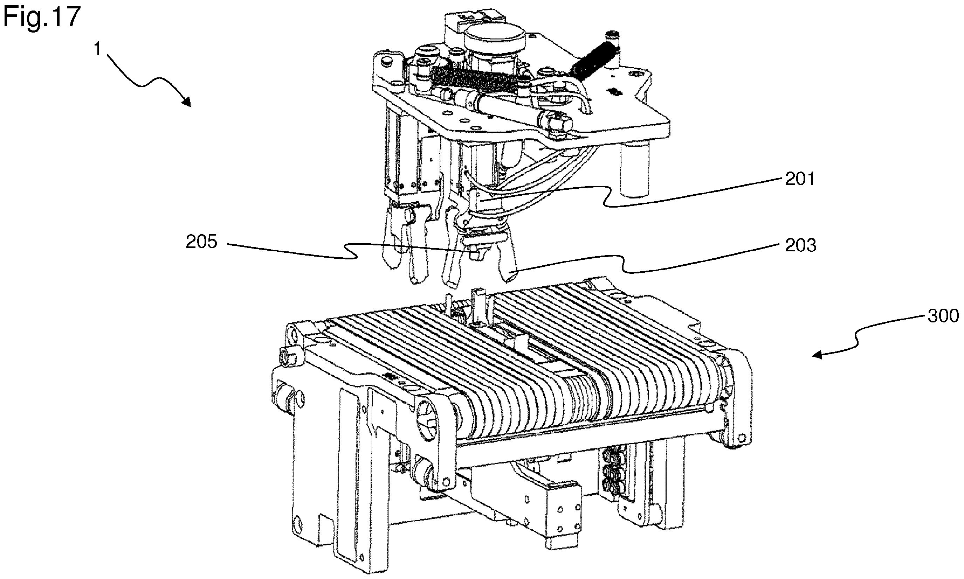

In Figur 15 ist der Stempel 205 des ersten Greifermittels 201 in einer vertikal nach unten gefahrenen Stellung dargestellt, sodass die Teignase des Teigstrang-Schlingendes 121 mittels des Stempels 205 innerhalb der Spreizfinger 311 des Verknotungsmittels 308 positioniert gehalten wird, bis, wie in Figur 16 gezeigt, die Spreizgreifer 311 schließen und so das Teigstrang-Schlingende 121 mit ausgebildeter Teignase aufnehmen. Die Greiferfinger 203 des ersten Greifermittels 201 befinden sich in vollständig geöffneter, nach außen gelenkter Stellung. Der Stempel 205 wird von einer, ausgefahrenen Stellung vertikal nach oben zurück in dessen Ausgangs- bzw. Grundstellung gefahren, wie schließlich in Figur 17 gezeigt.

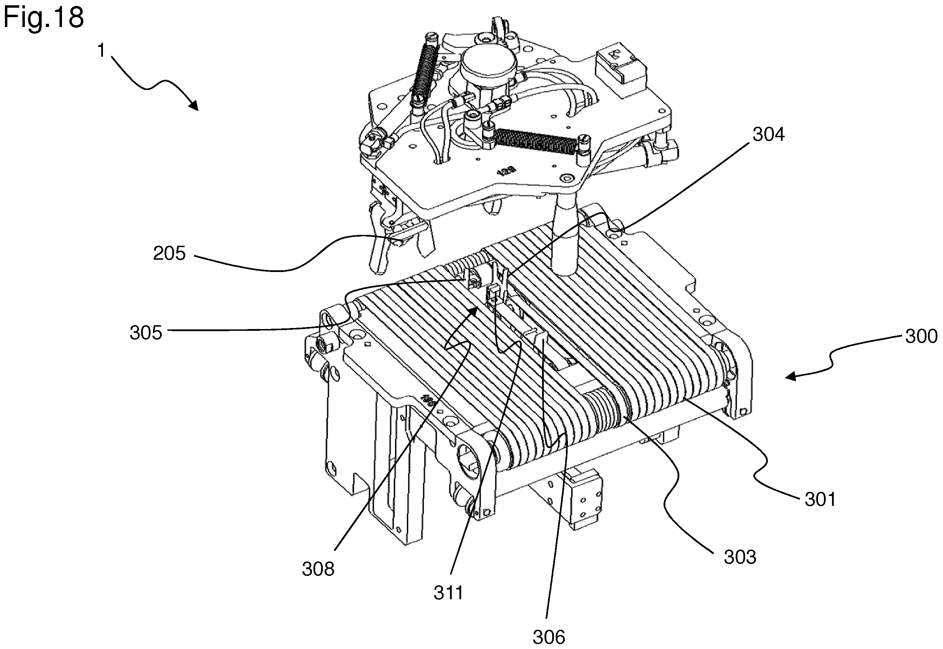

Gemäß Figur 18 befindet sich das Verknotungsmittel 308 in einer vertikal nach unten gefahrenen Stellung mit geschlossenen Spreizfingern 311 innerhalb des Verarbeitungstischs 300, sodass das Teigstrang-Schlingende 121 durch die zweite Teigstrang-Unterschlaufe 161b hindurch gezogen ist. Vorzugsweise wird die Haltegabel 305 gleichzeitig mit dem Verknotungsmittel 308 vertikal in den Verarbeitungstisch 300 gefahren, sodass lediglich das Teigstrang-Schlingende 121 innerhalb der zweiten Teigstrang-Unterschlaufe 161b verbleibt. Aufgrund dessen, dass der Durchmesser des Teigstrangs 100 geringer ist als der Abstand zwischen den geöffneten bzw. nach außen gekippten Spreizfinger 311 des Verknotungsmittels 308, sowie bedingt durch die Elastizität des Teigstrangs 100 zieht sich die zweite Teigstrang-Unterschlaufe 161b um das Teigstrang-Schlingende 121 zusammen. Das Teigstrang-Schlingende 121 lässt sich auf diese Weise in einer, die zweite Teigstrang-Unterschlaufe 161b durchsetzenden Positionierung fixieren. Erst nachdem das Teigstrang-Schlingende 121 mittels des Verknotungsmittels 308 vollständig durch die zweite Teigstrang-Unterschlaufe 161b gezogen wurde und/oder unterhalb der Oberfläche des Verarbeitungstischs 300 angeordnet ist, öffnen sich die Spreizfinger 311 des Verknotungsmittels 308, um das Teigstrang-Schlingende 121 freizugeben. Der fixierte Teigknotenrohling 140 entspricht schematisch der Figur 1f. Optional (und nicht dargestellt) drückt der Stempel 205 während des Durchziehens des Teigstrang-Schlingendes 121 zur zusätzlichen Stabilisierung bzw. Fixierung des Teigstrangknotenrohlings 140 auf den vierten Kreuzungspunkt 154.

Nach Abschluss des Schlingvorgangs setzen sich die Förderbänder 301 in Förderrichtung F in Bewegung und transportieren den fixierten Teigstrangknotenrohling 140 zu einer nachgeschalteten Verarbeitungsstation, vorzugsweise einer Kompaktierstation. Spätestens zum Wegtransport des Teigstrangknotens 140 werden die Haltegabel 304 sowie der Haltestift 305 innerhalb des Verarbeitungstischs 300 versenkt. Gleichzeitig wird ein bereits ausgerichteter Teigstrang 100 mit versetzten Teigstrangenden 111, 121 mittels der Förderbänder 301 sowie des Förderriemens 303 zu den Positionierungsmitteln 304, 305, 306, 307, 308 gefördert, die Teigverarbeitungsvorrichtung 1 befindet sich zu Beginn eines nachfolgenden Schlingvorgangs in ihrer Grund- bzw. Ausgangsstellung gemäß Figur 2.

### Liste der Bezugszeichen

- 1: Teigverarbeitungsvorrichtung

- 100: Teigstrang
- 110: erster Schenkel
- 111: Teigstrang-Fixende
- 120: zweiter Schenkel
- 121: Teigstrang-Schlingende
- 130: kreisbogenförmiger Abschnitt
- 140: Teigstrangknoten
- 151: erster Kreuzungspunkt
- 152: zweiter Kreuzungspunkt
- 153: dritter Kreuzungspunkt
- 154: vierter Kreuzungspunkt
- 161: erste Teigstrangschlaufe
- 161a: erste Teigstrang-Unterschlaufe
- 161b: zweite Teigstrang-Unterschlaufe
- 162: zweite Teigstrangschlaufe
- 163: dritte Teigstrangschlaufe

- D: Distanz der Teigstrangenden
- F: Förderrichtung
- -F: Zugrichtung

- 200: Verarbeitungskopf
- 201: erstes Greifermittel
- 202: zweites Greifermittel
- 203: Greiferfinger
- 204: Kröpfung
- 205: Stempel des ersten Greifermittels
- 206: Stempel des zweiten Greifermittels

- 300: Verarbeitungstisch
- 301: Förderband
- 302: Verarbeitungsbereich
- 302a: hinterer Abschnitt des Verarbeitungsbereichs
- 302b: Ausnehmung
- 303: Förderriemen
- 304: Haltegabel
- 305: Haltestift
- 306: Tischgreifer
- 307: Anhebemittel
- 307a: Kehlung
- 308: Verknotungsmittel
- 309: Formfinger
- 309a: Formkante
- 309b: Formkehlung
- 310: Gegenformfinger
- 311: Spreizfinger

## Patentansprüche

1. Verfahren zur Verarbeitung eines U-förmig gebogenen Teigstrangs (100) mit einem ersten Teigstrangende, das als Teigstrang-Fixende (111) verwendbar ist und einem zweiten Teigstrangende, das als Teigstrang-Schlingende (121) verwendbar ist, wobei der Teigstrang (100) mittels eines Verarbeitungskopfes (200) mit mindestens zwei Greifermitteln (201, 202) zu mindestens einer Teigstrangschlaufe (161, 162, 163) geschlungen wird und mittels eines Verarbeitungstischs (300) mit Positionierungsmitteln (304, 305, 306, 307) positioniert wird, wobei mindestens ein als Anhebemittel (307) ausgebildetes Positionierungsmittel den Teigstrang (100) bereichsweise in eine gegenüber dem Verarbeitungstisch (300) angehobene Anhebeposition anhebt und/oder wobei mindestens ein als Tischgreifer (306) ausgebildetes Positionierungsmittel eines der Teigstrangenden (121) bereichsweise dehnt und/oder zieht, **dadurch gekennzeichnet, dass** mindestens ein als Verknotungsmittel (308) ausgebildetes Positionierungsmittel (308) eine Öffnung einer Teigstrangschlaufe (161) spreizt und/oder dehnt und ein Teigstrangende (121) durch die Teigstrangschlaufe (161) führt, wobei dieses Teigstrangende (121) mittels der Teigstrangschlaufe (161) fixiert wird.

2. Verfahren zur Herstellung eines Teigstrangknotens (140) nach Anspruch 1, mit mindestens folgenden Schritten:
- Ausrichten des U-förmig gebogenen Teigstrangs (100) sodass das Teigstrang-Fixende (111) gegenüber dem Teigstrang-Schlingende (121) versetzt ist und/oder ein erster, das Teigstrang-Fixende (111) aufweisender Schenkel (110) des U-förmig gebogenen Teigstrangs (100) kürzer ist als ein zweiter, das Teigstrang-Schlingende (121) aufweisender Schenkel (120) des U-förmig gebogenen Teigstrangs (100),
- Schlingen einer ersten Teigstrangschlaufe (161), wobei das Teigstrang-Fixende (111) von einem ersten Greifermittel (201) aufgenommen wird und einen ersten Kreuzungspunkt (151) bildend, auf dem zweiten Schenkel (120) des U-förmig gebogenen Teigstrangs (100) positioniert wird,
- Schlingen einer zweiten Teigstrangschlaufe (162), wobei das Teigstrang-Schlingende (121) von einem zweiten Greifermittel (202) aufgenommen wird und einen zweiten Kreuzungspunkt (152) bildend, innerhalb der ersten Teigstrangschlaufe (161) positioniert wird,
- Schlingen eines Teigstrangknotens (140), wobei ein Abschnitt (130) des Teigstrangs im Bereich der ersten Teigstrangschlaufe (161) von dem Anhebemittel (307) in eine Anhebeposition angehoben wird, und das Teigstrang-Schlingende (121) mittels des Tischgreifers (306) unter dem angehobenen Teigstrangabschnitt (130), einen dritten Kreuzungspunkt (153) bildend, hindurchgeführt wird,
- Schlingen einer dritten Teigstrangschlaufe (163), wobei das Teigstrang-Schlingende (121) von einem der Greifermittel (202) aufgenommen wird und einen vierten Kreuzungspunkt (154) bildend, innerhalb der ersten Teigstrangschlaufe (161b) positioniert wird,
- Fixieren und/oder Verfestigen des Teigstrangknotens (140), wobei das Teigstrang-Schlingende (121) von dem Verknotungsmittel (308) aufgenommen wird und durch die erste Teigstrangschlaufe (161b) hindurchgeführt wird, sodass das Teigstrang-Schlingende (121) in einer, die erste Teigstrangschlaufe (161b) durchsetzenden Position fixiert wird.

3. Verfahren nach einem der vorhergehenden Ansprüche, **dadurch gekennzeichnet, dass** während des Schlingens des Teigstrangknotens (140) das in den Verarbeitungstisch (300) versenkbare Verknotungsmittel (308) aus dem Verarbeitungstisch (300) herausgefahren wird und innerhalb der ersten Teigstrangschlaufe (161b) platziert wird.

4. Verfahren nach einem der vorhergehenden Ansprüche, **dadurch gekennzeichnet, dass** während des Schlingens des Teigstrangknotens (140) der Tischgreifer (306) eine Zugkraft auf das Teigstrang-Schlingende (121) ausübt, wobei mindestens eine Öffnung der ersten Teigstrangschlaufe (161a, 161b) und/oder eine Öffnung der zweiten Teigstrangschlaufe (162) verkleinert und/oder zusammengezogen wird.

5. Verfahren nach einem der vorhergehenden Ansprüche, **dadurch gekennzeichnet, dass** während des Schlingens der dritten Teigstrangschlaufe (163) sich mindestens zwei Finger (311), des innerhalb der ersten Teigstrangschlaufe (161b) aus dem Verarbeitungstisch (300) vorspringenden Verknotungsmittels (308), voneinander wegbewegen, wobei die Öffnung der ersten Teigstrangschlaufe (161b) gespreizt und/oder gedehnt wird.

6. Verfahren nach einem der vorhergehenden Ansprüche, **dadurch gekennzeichnet, dass** während des Fixierens und/oder Verfestigens des Teigstrangknotens (140) sich mindestens zwei Finger (311), des innerhalb der ersten Teigstrangschlaufe (161b) aus dem Verarbeitungstisch (300) vorspringenden Verknotungsmittels (308), aufeinander zu bewegen, wobei das Teigstrang-Schlingende (121) von den mindestens zwei Fingern (311) aufgenommen wird.

7. Verfahren nach einem der vorhergehenden Ansprüche, **dadurch gekennzeichnet, dass** das Teigstrang-Schlingende (121) während des Fixierens und/oder Verfestigens des Teigstrangknotens (140) von einem der Greifermittel (201, 202) an das Verknotungsmittel (308) überführt wird.

8. Verfahren nach einem der vorhergehenden Ansprüche, **dadurch gekennzeichnet, dass** eines der Greifermittel (201, 202) einen Druck auf den vierten Kreuzungspunkt (154) ausübt, sodass diejenigen Bereiche (121, 120, 130) des Teigstrangs (100), die am vierten Kreuzungspunkt (154) angeordnet sind, miteinander fixiert werden.

9. Verfahren nach einem der vorhergehenden Ansprüche, **dadurch gekennzeichnet, dass** das Teigstrang-Fixende (111) gegenüber dem Teigstrang-Schlingende (121) um 4 - 8 cm versetzt ist und/oder der erste, das Teigstrang-Fixende (111) aufweisende Schenkel (110) des U-förmig gebogenen Teigstrangs (100) um 4 - 8 cm kürzer ist als der zweite, das Teigstrang-Schlingende (121) aufweisende Schenkel (120) des U-förmig gebogenen Teigstrangs (100).

10. Verfahren nach einem der vorhergehenden Ansprüche, **dadurch gekennzeichnet, dass** mindestens zwei zueinander versetzt angeordnete Greifermittel (201, 202)des Verarbeitungskopfs (200) die Teigstrangenden (111, 121) in etwa gleichzeitig aufnehmen, wobei der Versatz der Greifermittel (201, 202) zueinander in etwa einem Versatz (D) der Teigstrangenden (111, 121) zueinander entspricht.

11. Verfahren nach einem der vorhergehenden Ansprüche **gekennzeichnet durch** einen Kompaktierschritt, wobei der Teigknoten (140) mittels einer Kompaktierstation einer beidseitigen Druckeinwirkung unterzogen und/oder verdichtet wird.

12. Teigverarbeitungsvorrichtung (1) für ein Verfahren nach einem der Ansprüche 1 - 11 zum Verarbeiten eines U-förmigen Teigstrangs (100) mit einem ersten Teigstrangende (111) und einem zweiten Teigstrangende (121), wobei die Teigverarbeitungsvorrichtung (1) einen Verarbeitungskopf (200) und einen Verarbeitungstisch (300) aufweist, welcher Verarbeitungskopf (200) mindestens zwei Greifermittel (201, 202) zum Schlingen mindestens einer Teigstrangschlaufe (161, 162, 163) umfasst, und welcher Verarbeitungstisch (300) mit Positionierungsmitteln (304, 305, 306, 307) zum Positionieren des Teigstrangs (100) ausgeführt ist, und die verschiedenen Positionierungsmittel (304, 305, 306, 307) mehrere unterschiedliche Verarbeitungsfunktionen aufweisen, wobei
- mindestens ein Positionierungsmittel als Anhebemittel (307) zum Anheben eines Teigstrangbereichs (130) in eine Anhebeposition ausgeführt ist, sodass der Teigstrang (100) gegenüber dem Verarbeitungstisch (300) bereichsweise anhebbar ist, und/oder
- mindestens ein Positionierungsmittel als Tischgreifer (306) zum Ziehen eines Teigstrangendes (121) ausgeführt ist, sodass der Teigstrang (100) zumindest bereichsweise dehn- und/oder ziehbar ist, **dadurch gekennzeichnet, dass**
- mindestens ein Positionierungsmittel als Verknotungsmittel (308) zum Spreizen und/oder Dehnen einer Öffnung einer Teigstrangschlaufe (161) und zum Durchführen eines Teigstrangendes (121) durch die Teigstrangschlaufe (161) ausgeführt ist, sodass das Teigstrangende (121) die Teigstrangschlaufe (161) durchsetzend fixierbar ist.

13. Teigverarbeitungsvorrichtung (1) nach Anspruch 12, **dadurch gekennzeichnet, dass** das Verknotungsmittel (308) mindestens zwei Finger (311) aufweist, die aus dem Verarbeitungstisch (300) vorspringend und aufeinander zu und voneinander weg bewegbar ausgebildet sind.

14. Teigverarbeitungsvorrichtung (1) nach einem der Ansprüche 12 und 13, **dadurch gekennzeichnet, dass** das Verknotungsmittel (308) als Spreizgreifer mit mindestens zwei Spreizfingern (311) ausgeführt ist, wobei die Spreizfinger (311) aufeinander zu und voneinander weg bewegbar sind und das Verknotungsmittel (308) in den Verarbeitungstisch (300) versenkbar und aus dem Verarbeitungstisch (300) ausfahrbar ist.

15. Teigverarbeitungsvorrichtung (1) nach einem der Ansprüche 12 - 14, **dadurch gekennzeichnet, dass** der Tischgreifer (306) zum Ziehen eines Teigstrangendes (121), in Zugrichtung (-F) und/oder parallel zur Zugrichtung (-F) öffenbar und schließbar ist.

16. Teigverarbeitungsvorrichtung (1) nach einem der Ansprüche 12 - 15, **dadurch gekennzeichnet, dass** der Tischgreifer (306) eine Formkante (309a) und/oder eine Formkehlung (309b), zum Formen einer Teigstrangnase an einem der Teigstrangenden (121) aufweist.

17. Teigverarbeitungsvorrichtung (1) nach einem der Ansprüche 12 - 16, **dadurch gekennzeichnet, dass** die Teigverarbeitungsvorrichtung (1) eine Kompaktierstation, zum Verdichten des Teigstrangknotens (140) und/oder zur beidseitigen Druckausübung auf den Teigstrangknoten (140) umfasst.

18. Teigverarbeitungsvorrichtung (1) nach einem der Ansprüche 12 - 17, wobei die mindestens zwei Greifermittel (201, 202) des Verarbeitungskopfes (200) jeweils einen Stempel (205, 206) sowie zwei Greiferfinger (203) umfassen, **dadurch gekennzeichnet, dass** der Stempel (205, 206) zwischen den Greiferfingern (203) und/oder in einer Ebene mit den Greiferfingern (203) angeordnet ist.

19. Teigverarbeitungsvorrichtung (1) nach einem der Ansprüche 12 - 18, wobei der Verarbeitungstisch (300) mehrere, im Wesentlichen parallel zueinander angeordnete, benachbarte Förderbänder (301) zum Fördern des Teigstrangs (100) aufweist, und wobei zumindest ein Teil der Positionierungsmittel (303, 304, 305, 306, 307, 308) zwischen jeweils benachbarten Förderbändern (301) angeordnet ist, **dadurch gekennzeichnet, dass** mindestens ein Positionierungsmittel (303) als Förderriemen (303) zum Positionieren eines Bereichs des Teigstrangs (130) an mindestens einem Positionierungsmittel (304, 306, 308) ausgebildet ist, wobei der Förderriemen (303) an dem Positionierungsmittel (304, 306, 308) endet oder beginnt und/oder das Positionierungsmittel (304, 306, 308) am Ende oder zu Beginn des Förderriemens (303) angeordnet ist.

20. Positionierungsmittel (308) für einen Verarbeitungstisch (300) einer Teigverarbeitungsvorrichtung (1) mit mehreren unterschiedlichen Verarbeitungsfunktionen zum Erzeugen mindestens einer Teigstrangschlaufe (161, 162, 163) aus einem Teigstrang (100), **dadurch gekennzeichnet, dass** das Positionierungsmittel (308) als Verknotungsmittel (308) ausgebildet ist und zur Durchführung der folgenden Verarbeitungsfunktionen ausgebildet ist:
- Spreizen und/oder Dehnen einer Öffnung einer Teigstrangschlaufe (161), wobei das Positionierungsmittel (308) im Wesentlichen entlang einer Tischebene des Verarbeitungstischs (300) bewegbar ist,
- Durchführen eines Teigstrangendes (121) durch die Teigstrangschlaufe (161), wobei das Positionierungsmittel (308) im Wesentlichen senkrecht zu einer Tischebene des Verarbeitungstischs (300) bewegbar ist.

21. Positionierungsmittel (308) nach Anspruch 20, **dadurch gekennzeichnet, dass** das Positionierungsmittel (308) als Spreizgreifer (308) derart mit dem Verarbeitungstisch (300) anordenbar ist, dass mindestens zwei Spreizfinger (311) des Positionierungsmittels (308) aus dem Verarbeitungstisch (300) vorspringend angeordnet und aufeinander zu sowie voneinander weg bewegbar sind und/oder, dass das Positionierungsmittel (308) in den Verarbeitungstisch (300) versenkbar sowie aus dem Verarbeitungstisch (300) ausfahrbar ausgebildet ist.

## Claims

1. A method for processing a U-shaped dough strand (100) having a first dough strand end, which can be used as a securing dough strand end (111), and a second dough strand end, which can be used as a looping dough strand end (121), wherein the dough strand (100) is looped by means of a processing head (200) having at least two gripping means (201, 202) to form at least one dough strand loop (161, 162, 163) and is positioned by means of a processing table (300) having positioning means (304, 305, 306, 307), wherein at least one positioning means embodied as a lifting means (307) raises sections of the dough strand (100) to a raised position relative to the processing table (300), and/or wherein at least one positioning means embodied as a table gripper (306) stretches and/or pulls sections of one of the dough strand ends (121), **characterized in that** at least one positioning means (308) embodied as a knotting means (308) spreads and/or expands an opening of a dough strand loop (161) and guides a dough strand end (121) through the dough strand loop (161), said dough strand end (121) being secured in place by means of the dough strand loop (161).

2. The method for producing a dough strand knot (140) according to claim 1, comprising at least the following steps:
- aligning the U-shaped dough strand (100) such that the securing dough strand end (111) is offset relative to the looping dough strand end (121) and/or a first arm (110) of the U-shaped dough strand (100), which comprises the securing dough strand end (111), is shorter than a second arm (120) of the U-shaped dough strand (100), which comprises the looping dough strand end (121),
- looping a first dough strand loop (161), wherein the securing dough strand end (111) is picked up by a first gripping means (201) and placed on the second arm (120) of the U-shaped dough strand (100), forming a first intersection point (151),
- looping a second dough strand loop (162), wherein the looping dough strand end (121) is picked up by a second gripping means (202) and is positioned within the first dough strand loop (161), forming a second intersection point (152),
- looping a dough strand knot (140), wherein a section (130) of the dough strand in the region of the first dough strand loop (161) is lifted to a raised position by the lifting means (307), and the looping dough strand end (121) is guided by means of the table gripper (306) beneath the raised dough strand section (130), forming a third intersection point (153),
- looping a third dough strand loop (163), wherein the looping dough strand end (121) is picked up by one of the gripping means (202) and is positioned within the first dough strand loop (161b), forming a fourth intersection point (154),
- securing and/or stabilizing the dough strand knot (140), wherein the looping dough strand end (121) is picked up by the knotting means (308) and is guided through the first dough strand loop (161b), so that the looping dough strand end (121) is secured in a position in which it has passed through the first dough strand loop (161b).

3. The method according to one of the preceding claims, **characterized in that** during looping of the dough strand knot (140), the knotting means (308), which can be retracted into the processing table (300), is extended out of the processing table (300) and positioned within the first dough strand loop (161b).

4. The method according to one of the preceding claims, **characterized in that** during looping of the dough strand knot (140), the table gripper (306) exerts a pulling force on the looping dough strand end (121), wherein at least one opening of the first dough strand loop (161a, 161b) and/or an opening of the second dough strand loop (162) is reduced in size and/or contracted.

5. The method according to one of the preceding claims, **characterized in that** during the looping of the third dough strand loop (163), at least two fingers (311) of the knotting means (308) projecting out of the processing table (300) within the first dough strand loop (161b), move away from one another, wherein the opening of the first dough strand loop (161b) is spread or expanded.

6. The method according to one of the preceding claims, **characterized in that** during the securing and/or stabilization of the dough strand knot (140), at least two fingers (311) of the knotting means (308) projecting out of the processing table (300) within the first dough strand loop (161b), move toward one another, wherein the looping dough strand end (121) is picked up by the at least two fingers (311).

7. The method according to one of the preceding claims, **characterized in that** during the securing an/or stabilization of the dough strand knot (140), the looping dough strand end (121) is transferred to the knotting means (308) by one of the gripping means (201, 202).

8. The method according to one of the preceding claims, **characterized in that** one of the gripping means (201, 202) exerts pressure on the fourth intersection point (154), so that those sections (121, 120, 130) of the dough strand (100) which are located at the fourth intersection point (154) are secured to one another.

9. The method according to one of the preceding claims, **characterized in that** the securing dough strand end (111) is offset 4-8 cm in relation to the looping dough strand end (121) or the first arm (110) of the U-shaped dough strand (100), which comprises the securing dough strand end (111), is 4-8 cm shorter than the second arm (120) of the U-shaped dough strand (100), which comprises the looping dough strand end (121).

10. The method according to one of the preceding claims, **characterized in that** at least two gripping means (201, 202) of the processing head (200), arranged offset from one another, pick up the dough strand ends (111, 121) at approximately the same time, wherein the offset of the gripping means (201, 202) relative to one another corresponds approximately to the offset (D) of the dough strand ends (111, 121) relative to one another.

11. The method according to one of the preceding claims, **characterized by** a compacting step, wherein the dough knot (140) is subjected to pressure applied from sides and/or is compacted by means of a compacting station.

12. A dough processing device (1) for a method according to one of claims 1 - 11 for processing a U-shaped dough strand (100) having a first dough strand end (111) and a second dough strand end (121), wherein the dough processing device (1) comprises a processing head (200) and a processing table (300), which processing head (200) comprises at least two gripping means (201, 202) for looping at least one dough strand loop (161, 162, 163), and which processing table (300) is embodied with positioning means (304, 305, 306, 307) for positioning the dough strand (100), and the various positioning means (304, 305, 306, 307) have a plurality of different processing functions, wherein
- at least one positioning means is embodied as a lifting means (307) for raising a dough strand section (130) to a raised position, so that regions of the dough strand (100) can be raised relative to the processing table (300), and/or
- at least one positioning means is embodied as a table gripper (306) for pulling a dough strand end (121), so that at least regions of the dough strand (100) can be stretched and/or pulled, **characterized in that**
- at least one positioning means is embodied as a knotting means (308) for spreading and/or expanding an opening of a dough strand loop (161) and or for guiding a dough strand end (121) through the dough strand loop (161) so that the dough strand end (121) can be secured in place after passing through the dough strand loop (161).

13. The dough processing device (1) according to claim 12, **characterized in that** the knotting means (308) has at least two fingers (311), which are embodied projecting out of the processing table (300) and movable toward one another and away from one another.

14. The dough processing device (1) according to one of claims12 and 13, **characterized in that** the knotting means (308) is embodied as a spreading gripper having at least two spreading fingers (311), wherein the spreading fingers (311) are movable toward one another and away from one another, and the knotting means (308) is retractable into the processing table (300) and extendable out of the processing table (300).

15. The dough processing device (1) according to one of claims12 - 14, **characterized in that** the table gripper (306) can be opened and closed in order to pull a dough strand end (121) in the pulling direction (-F) or parallel to the pulling direction (-F).

16. The dough processing device (1) according to one of claims12 - 15, **characterized in that** the table gripper (306) has a shaping edge (309a) and/or a shaping groove (309b) for shaping a dough strand nib on one of the dough strand ends (121).

17. The dough processing device (1) according to one of claims12 - 16, **characterized in that** the dough processing device (1) comprises a compacting station for compacting the dough strand knot (140) and/or for exerting pressure on both sides of the dough strand knot (140).

18. The dough processing device (1) according to one of claims12 - 17, whereni the at least two gripping means (201, 202) of the processing head (200) each comprise a plunger (205, 206) and two gripping fingers (203), **characterized in that** the plunger (205, 206) is disposed between the gripping fingers (203) and/or in the same plane as the gripping fingers (203).

19. The dough processing device (1) according to one of claims12 - 18, wherein the processing table (300) has a plurality of mutually adjacent conveyor belts (301) arranged substantially parallel to one another for conveying the dough strand (100), and wherein at least a subset of the positioning means (303, 304, 305, 306, 307, 308) are disposed between respectively adjacent conveyer belts (301), **characterized in that** at least one positioning means (303) is embodied as a conveyor strip (303) for positioning a section of the dough strand (130) on at least one positioning means (304, 306, 308), wherein the conveyor strip (303) ends or begins at the positioning means (304, 306, 308), and/or the positioning means (304, 306, 308) is disposed at the end or at the beginning of the conveyor strip (303).

20. A positioning means (308) for a processing table (300) of a dough processing device (1) having a plurality of different processing functions for producing at least one dough strand loop (161, 162, 163) from a dough strand (100), **characterized in that** the positioning means (308) is embodied as a knotting means (308) and is embodied for carrying out one or more of the following processing functions:
- spreading and/or expanding an opening of a dough strand loop (161), wherein the positioning means (308) is capable of moving substantially along a table plane of the processing table (300),
- guiding a dough strand end (121) through the dough strand loop (161), wherein the positioning means (308) is capable of moving substantially perpendicular to a table plane of the processing table (300).

21. The positioning means (308) according to claim 20, **characterized in that** the positioning means (308) in the form of a spreading gripper (308) can be arranged with the processing table (300) in such a way that at least two spreading fingers (311) of the positioning means (308) are arranged projecting out of the processing table (300) and can be moved toward one another and away from one another, and/or **in that** the positioning means (308) can be retracted into the processing table (300) and extended out of the processing table (300).

## Revendications

1. Procédé de préparation d'un paton (100) plié en forme de U avec une première extrémité de paton qui peut être utilisée comme extrémité fixe de paton (111) et une deuxième extrémité de paton qui peut être utilisée comme extrémité de bouclage de paton (121), dans lequel le paton (100) est bouclé au moyen d'une tête de préparation (200) avec au moins deux moyens de préhension (201, 202) pour former au moins une boucle de paton (161, 162, 163) et est positionné au moyen d'une table de préparation (300) avec des moyens de positionnement (304, 305, 306, 307), dans lequel au moins un moyen de positionnement sous la forme d'un moyen de levage (307) soulève le paton (100) par zone dans une position de levage surélevée par rapport à la table de préparation (300) et/ou dans lequel au moins un moyen de positionnement sous la forme d'une pince de préhension de table (306) prolonge et/ou tire par zone l'une des extrémités du paton (121), **caractérisé en ce qu'**au moins un moyen de positionnement (308) conçu comme un moyen de nouage (308) écarte et/ou étire une ouverture d'une boucle de paton (161) et guide une extrémité de paton (121) à travers la boucle de paton (161), cette extrémité de paton (121) étant fixée au moyen de la boucle de paton (161).

2. Procédé de production d'un noeud de paton (140) selon la revendication 1, comprenant au moins les étapes suivantes:
- alignement du paton (100) plié en forme de U de sorte que l'extrémité fixe du paton (111) soit décalée par rapport à l'extrémité de bouclage du paton (121) et/ou qu'une première branche (110) du paton (100) plié en forme de U ayant l'extrémité fixe du paton (111) soit plus courte qu'une deuxième branche (120) du paton (100) plié en forme de U ayant l'extrémité de bouclage du paton (121),
- bouclage d'une première boucle de paton (161), dans lequel l'extrémité de fixation du paton (111) est reçue par un premier moyen de préhension (201) et, formant un premier point de croisement (151), est positionnée sur la deuxième branche (120) du paton plié en U (100),
- bouclage d'une deuxième boucle de paton (162), dans lequel l'extrémité de la boucle de paton (121) est reçue par un deuxième moyen de préhension (202) et est positionnée à l'intérieur de la première boucle de paton (161) formant un deuxième point de croisement (152),
- le dispositif de levage (307) soulève une partie (130) du paton dans la zone de la première boucle (161) du paton dans une position de levage et fait passer l'extrémité (121) de la boucle du paton au moyen de la pince de préhension de table (306) sous la partie (130) du paton soulevée, formant ainsi un troisième point de croisement (153),
- bouclage d'une troisième boucle (163), l'extrémité de la boucle (121) étant reçue par un des moyens de préhension (202) et positionnée à l'intérieur de la première boucle (161b) formant un quatrième point de croisement (154),
- fixation et/ou solidification du noeud (140) du paton, dans lequel l'extrémité (121) de la boucle du paton est reçue par le moyen de nouage (308) et est passée à travers la première boucle (161b) du paton de sorte que l'extrémité (121) de la boucle du paton est fixée dans une position passant à travers la première boucle (161b) du paton.

3. Procédé selon l'une des revendications précédentes, **caractérisé en ce que**, pendant la formation de la boucle du noeud du paton (140), le moyen de nouage (308), qui peut être abaissé dans la table de préparation (300), est déplacé hors de la table de préparation (300) et placé à l'intérieur de la première boucle du paton (161b).

4. Procédé selon l'une des revendications précédentes, **caractérisé en ce que**, pendant la formation du noeud du paton (140), la pince de préhension de table (306) exerce une force de traction sur l'extrémité de formation du paton (121), dans lequel au moins une ouverture de la première boucle du paton (161a, 161b) et/ou une ouverture de la deuxième boucle du paton (162) est réduite et/ou contractée.

5. Procédé selon l'une des revendications précédentes.
**caractérisé en ce que** pendant le bouclage de la troisième boucle de paton (163), au moins deux doigts (311) du moyen de nouage (308) faisant saillie de la table de préparation (300) à l'intérieur de la première boucle de paton (161b) s'éloignent l'un de l'autre, dans lequel l'ouverture de la première boucle de paton (161b) est écartée et/ou étirée.

6. Procédé selon l'une des revendications précédentes, **caractérisé en ce que**, pendant la fixation et/ou la solidification du noeud (140) du paton, au moins deux doigts (311) du moyen de nouage (308) faisant saillie de la table de préparation (300) à l'intérieur de la première boucle (161b) du paton se rapprochent l'un de l'autre, l'extrémité (121) de la boucle du paton étant reçue par lesdits au moins deux doigts (311).

7. Procédé selon l'une des revendications précédentes, **caractérisé en ce que** l'extrémité de bouclage du paton (121) est transférée de l'un des moyens de préhension (201, 202) au moyen de nouage (308) pendant la fixation et/ou la solidification du noeud du paton (140).

8. Procédé selon l'une des revendications précédentes, **caractérisé en ce que** l'un des moyens de préhension (201, 202) exerce une pression sur le quatrième point de croisement (154) de sorte que les parties (121, 120, 130) du paton (100) qui sont disposées au quatrième point de croisement (154) sont fixées ensemble.

9. Procédé selon l'une des revendications précédentes, **caractérisé en ce que** l'extrémité fixe (111) du paton est décalée de 4 à 8 cm par rapport à l'extrémité de bouclage (121) du paton et/ou la première branche (110) du paton plié en U (100) ayant l'extrémité fixe (111) du paton est plus courte de 4 à 8 cm que la deuxième branche (120) du paton plié en U (100) ayant l'extrémité de bouclage (121) du paton.

10. Procédé selon l'une des revendications précédentes, **caractérisée en ce qu'**au moins deux moyens de préhension (201, 202) décalés de la tête de préparation (200) reçoivent les extrémités des patons (111, 121) à peu près simultanément, le décalage des moyens de préhension (201, 202) l'un par rapport à l'autre correspondant à peu près à un décalage (D) des extrémités des patons (111, 121) l'une par rapport à l'autre.

11. Procédé selon l'une des revendications précédentes, **caractérisé par** une étape de compactage, dans laquelle le noeud de pâte (140) est soumis à une action de pression des deux côtés et/ou comprimé au moyen d'une station de compactage.

12. Dispositif de préparation de pâte (1) pour un procédé selon l'une des revendications 1 à 11 pour traiter un paton en forme de U (100) ayant une première extrémité de paton (111) et une deuxième extrémité de paton (121), l'dispositif de préparation de pâte (1) comprenant une tête de préparation (200) et une table de préparation (300), ladite tête de préparation (200) comprenant au moins deux moyens de préhension (201, 202) pour mettre en boucle au moins une boucle de paton (161, 162, 163), et dont la table de préparation (300) est conçue avec des moyens de positionnement (304, 305, 306, 307) pour positionner le paton (100), et les différents moyens de positionnement (304, 305, 306, 307) ont plusieurs fonctions de préparation différentes, dans laquelle
- au moins un moyen de positionnement est conçu comme un moyen de levage (307) pour soulever une zone de paton (130) dans une position de levage de sorte que le paton (100) puisse être soulevé localement par rapport à la table de préparation (300), et/ou
- au moins un moyen de positionnement est conçu comme pince de préhension de table (306) pour tirer un paton (121) de sorte que le paton (100) puisse être étiré et/ou tiré au moins par zones, **caractérisé en ce que**
- au moins un moyen de positionnement est conçu comme un moyen de nouage (308) pour écarter et/ou étirer une ouverture d'une boucle de paton (161) et pour faire passer une extrémité de paton (121) à travers la boucle de paton (161), de sorte que l'extrémité de paton (121) puisse être fixée en passant à travers la boucle de paton (161).

13. Dispositif de préparation de pâte (1) selon la revendication 12, **caractérisé en ce que** le moyen de nouage (308) comprend au moins deux doigts (311) qui sont formés en saillie de la table de préparation (300) et qui peuvent être rapprochés et éloignés l'un de l'autre.

14. Dispositif de préparation de pâte (1) selon l'une des revendications 12 et 13, **caractérisé en ce que** le moyen de nouage (308) est conçu comme une pince à expansion avec au moins deux doigts à expansion (311), les doigts à expansion (311) pouvant être rapprochés et éloignés l'un de l'autre et le moyen de nouage (308) pouvant être rétracté dans la table de préparation (300) et sorti de la table de préparation (300).

15. Dispositif de préparation de pâte (1) selon l'une des revendications 12 à 14, **caractérisé en ce que** la pince de préhension de table (306) peut être ouverte et fermée pour tirer une extrémité de paton (121), dans la direction de traction (-F) et/ou parallèlement à la direction de traction (F).

16. Dispositif de préparation de pâte (1) selon l'une des revendications 12 à 15, **caractérisé en ce que** la pince de préhension de table (306) présente un bord de formage (309a) et/ou une rainure de formage (309b) pour former un nez de paton à l'une des extrémités du paton (121).

17. Dispositif de préparation de pâte (1) selon l'une des revendications 12 à 16, **caractérisé en ce que** le dispositif de préparation de pâte (1) comprend une station de compactage pour comprimer le noeud du paton (140) et/ou pour exercer une pression des deux côtés du noeud du paton (140).

18. Dispositif de préparation de pâte (1) selon l'une des revendications 12 à 17, dans lequel les au moins deux moyens de préhension (201, 202) de la tête de préparation (200) comprennent chacun un poinçon (205, 206) et deux doigts de préhension (203), **caractérisé en ce que** le poinçon (205, 206) est disposé entre les doigts de préhension (203) et/ou dans un plan avec les doigts de préhension (203).

19. Dispositif de préparation de pâte (1) selon l'une quelconque des revendications 12 à 18, dans lequel la table de préparation (300) comprend une pluralité de bandes transporteuses (301) adjacentes, disposées sensiblement parallèlement les unes aux autres pour transporter le paton (100), et dans lequel au moins certains des moyens de positionnement (303, 304, 305, 306, 307, 308) sont disposés entre des bandes transporteuses (301) respectivement adjacentes, **caractérisé en ce que en ce qu'**au moins un moyen de positionnement (303) est conçu comme une bande transporteuse (303) pour positionner une zone du paton (130) sur au moins un moyen de positionnement (304, 306, 308), la bande transporteuse (303) se terminant ou commençant au niveau du moyen de positionnement (304, 306, 308) et/ou le moyen de positionnement (304, 306, 308) étant disposé à la fin ou au début de la bande transporteuse (303).

20. Moyen de positionnement (308) pour une table de préparation (300) d'un dispositif de préparation de pâte (1) avec plusieurs fonctions de préparation différentes pour produire au moins une boucle de paton (161, 162, 163) à partir d'un paton (100), **caractérisé en ce que** le moyen de positionnement (308) est conçu comme un moyen de nouage (308) et est configuré pour effectuer les fonctions de préparation suivantes:
- étendre et/ou étirer une ouverture d'une boucle de paton (161), dans lequel le moyen de positionnement (308) est mobile sensiblement le long d'un plan de la table de préparation (300),
- faire passer une extrémité de paton (121) à travers la boucle de paton (161), dans lequel le moyen de positionnement (308) est mobile sensiblement perpendiculairement à un plan de la table de préparation (300).

21. Moyen de positionnement (308) selon la revendication 20, **caractérisé en ce que** le moyen de positionnement (308) peut être disposé en tant que pince à expansion (308) avec la table de préparation (300) de telle sorte qu'au moins deux doigts à expansion (311) du moyen de positionnement (308) sont disposés en saillie de la table de préparation (300) et peuvent être rapprochés et éloignés l'un de l'autre et/ou que le moyen de positionnement (308) est conçu pour pouvoir être abaissé dans la table de préparation (300) et pour pouvoir être sorti de la table de préparation (300).
